# EUROPEAN PATENT APPLICATION

(11) **EP 4 521 784 A1**
(43) Date of publication of application: **12.03.2025**
(21) Application number: 24198456.6
(22) Date of filing: 04.09.2024
(51) Int. Cl.: H04W 4/38, B60W 60/00, H04W 4/46

(54) **METHOD, DEVICE, AND COMPUTER PROGRAM FOR IMPROVING COMMUNICATION IN AN INTELLIGENT TRANSPORT SYSTEM**

(30) Priority: 07.09.2023 GB 202313683
(71) Applicant: CANON KABUSHIKI KAISHA, Tokyo 146-8501 (JP)
(72) Inventor: CANCOUET, Maxime, 35517 Cesson-Sévigné Cedex (FR); NASSOR, Eric, 35517 Cesson-Sévigné Cedex (FR); BELLESSORT, Romain, 35517 Cesson-Sévigné Cedex (FR); MORVAN, Isabelle, 35517 Cesson-Sévigné Cedex (FR); LE HOUEROU, Brice, 35517 Cesson-Sévigné Cedex (FR); BONNIN, Jean-Marie, 35510 Cesson-Sévigné (FR)
(74) Representative: Casalonga France

(57) **Abstract**

According to some embodiments of the disclosure, it is provided a method, in an Intelligent Transport System, ITS, of signalling an originating ITS station, ITS-S, with improper behaviour. After having obtained an indication representative of an inconsistency between a first item of information of a description of a first perception region and a second item of information of a description of a second perception region, each of the descriptions of the first and the second perception regions being contained in a perception region container of a Collective Perception Message, CPM, generated by the originating ITS-S, or representative of an inconsistency between the first item of information and a third item of information of a description of a perceived object in relation to the first perception region, a report comprising the obtained indication is generated.

## Description

### FIELD OF THE DISCLOSURE

The present disclosure relates generally to Intelligent Transport Systems (ITSs) and more specifically to Cooperative Intelligent Transport Systems (C-ITSs).

### BACKGROUND OF THE DISCLOSURE

Cooperative Intelligent Transport Systems (C-ITSs) is an emerging technology for future transportation management that aims at improving road safety, traffic efficiency and driver experience.

Intelligent Transport Systems (ITS), as defined by the European Telecommunications Standards Institute (ETSI), include various types of communication such as:
- communications between vehicles (e.g., car-to-car), and
- communications between vehicles and stationary stations (e.g., car-to-infrastructure).

C-ITSs are not restricted to road transport as such. More generally, C-ITS may be defined as the use of information and communication technologies (ICT) for rail, water, and air transport, including navigation systems. Such various types of C-ITS generally rely on radio services for communication and use dedicated technologies.

Such C-ITSs are subject to standards, specified for each country and/or territory where C-ITSs are implemented. Today, in Europe, the European Telecommunications Standards Institute is in charge of the elaboration of the specifications forming the standards to which C-ITSs are subjected.

Cooperation within C-ITSs is achieved by exchange of messages, referred as to ITS messages, between ITS stations (denoted ITS-Ss). The ITS-Ss may be vehicles, Road Side Units (RSUs), Vulnerable Road Users (VRUs) carrying an ITS equipment (for instance included in a smartphone, a GPS device, a smart watch, or in a cyclist equipment), or any other entities or infrastructure equipped with an ITS equipment, as well as central subsystems (back-end systems and traffic management centers).

As observed above, C-ITSs may support various types of communications, for instance between vehicles (vehicle-to-vehicle or "V2V"), referring to all kinds of road users, e.g., car-to-car, or between vehicles and stationary stations such as vehicle-to-infrastructure or "V2!", and infrastructure-to-vehicle or "I2V", e.g., car-to-infrastructure.

Such exchanges of messages may be performed via a wireless network, referred to as "V2X" (for "vehicle" to any kind of devices) networks, examples of which may include 3GPP LTE- Advanced Pro, 3GPP 5G, or IEEE 802.11p technology (3GPP, LTE, and IEEE are Registered Trade Marks).

Exemplary ITS messages include Cooperative Awareness Messages (CAMs), Vulnerable Road Users Awareness Messages (VAMs), and Decentralized Environmental Notification Messages (DENMs). An ITS-S sending an ITS message is referred to as an "originating" ITS-S and an ITS-S receiving an ITS message is referred to as a "receiving" ITS-S. VAMs and CAMs are generally periodically sent with a period varying depending, for example, on the speed of the originating ITS-S.

It is noted that ETSI TS 103 324 (v2.1.1 of June 2023) defines the Collective Perception Service through which an ITS-S having on-board sensor systems detects objects in its vicinity and transmits, using broadcast CPMs, description information (e.g. dynamics such as position and/or kinematic information) thereof. The CPMs are sent periodically with a period from 100 ms to 1 s depending for example on the speed of the objects sensed by the originating ITS-S.

It is recalled here that EN 302 637-2 (V1.4.1 of April 2019) standard defines the Cooperative Awareness Basic Service, that may be used by an ITS-S to transmit, using broadcast CAMs, its ego-vehicle dynamics (e.g., its position and speed). The CAMs are generally periodically sent with a period varying from 100 milliseconds to one second depending, for example, on the speed of the originating ITS-S.

It is also to be noted that EN 302 637-3 (V1.3.1 of April 2019) standard defines the Decentralized Environmental Notification Basic Service, that may be used by an originating ITS-S to send, using broadcast DENMs, notifications to other ITS-Ss, such as warnings or alerts. Such a message notifies an event (e.g., a road hazard, driving environment information, traffic condition information, etc.) detected by the originating ITS-S.

Each ITS station has an environment model called a Local Dynamic Map (LDM) that is regularly updated with highly dynamic data to locate vehicles, pedestrians, bicycles, etc., in the vicinity of the ITS station. The LDM is updated using information from on-board sensors and completed with information from received ITS messages such as awareness messages containing the ego-position and the speed of connected vehicles (CAMs) and/or of connected Vulnerable Road Users (VAMs) and such as Collective perception messages (CPMs) containing the perceived objects (e.g. vehicles, motorbikes, bicycles or pedestrians) from sensor-equipped ITS stations. CPMs improve the local perception ability (larger field of view, non-connected objects etc.).

It is observed that cooperative ITS messages are not encrypted when exchanged over the V2X network. To guarantee authentication of the transmitting or originating ITS station and data integrity of the ITS messages, a Public Key Infrastructure (PKI) providing digital certificates to the ITS stations is implemented.

The PKI mechanism alone cannot address all cyber threats. For instance, misbehaving entities in possession of valid certificates can still transmit tampered data.

Consequently, additional security mechanisms need to be deployed at the ITS stations to detect misbehaving entities, and to report them to a Misbehaviour Authority (MA) in case of detection. In the scope of the disclosure, it is important to note that a misbehaving entity is not necessarily malicious, it may be a malfunctioning entity. Indeed, it is difficult to determine whether a station is malicious or "only" malfunctioning, but in both cases, it is important to make its misbehaviour visible.

TS 103 759 (V2.1.1 of January 2023) defines the Misbehaviour Reporting Service, by which an ITS Station (ITS-S) or an end entity may provide misbehaviour reports to the MA of the C-ITS Cooperative-ITS Credential Management System (CCMS). In particular, it defines the report format, which is dependent of the application in which a misbehaviour has been detected.

Therefore, there is a need to improve detecting and/or reporting of malfunctioning entities in C-ITS.

### SUMMARY OF THE DISCLOSURE

The present disclosure has been devised to address one or more of the foregoing concerns.

In this context, there is provided a solution to improve detecting and/or reporting of malfunctioning entities in C-ITS.

According to a first aspect of the disclosure, there is provided a method, in an Intelligent Transport System, ITS, of signalling an originating ITS station, ITS-S, with improper behaviour, the method comprising:
obtaining an indication representative of an inconsistency between a first item of information of a description of a first perception region and a second item of information of a description of a second perception region, each of the descriptions of the first and the second perception regions being contained in a perception region container of a Collective Perception Message, CPM, generated by the originating ITS-S, or
representative of an inconsistency between the first item of information and a third item of information of a description of a perceived object in relation to the first perception region; and
generating a report comprising the obtained indication.

Accordingly, the method of the disclosure makes it possible to detect and/or report malfunctioning entities in C-ITS, using perception region information in Collective Perception Messages (CPMs), to avoid hazardous situations and/or overloading of the communication network, leading to improve trust in ITS messages in general.

According to some embodiments, the descriptions of the first and second perception regions are in the same CPM or in different CPMs.

Still according to some embodiments, each of the first and second items of information belongs to an instance of a perception region datafield contained in a perception region container of a CPM.

Still according to some embodiments, the first and the second perception regions are the same region described in different CPMs or different regions described in the same CPM.

Still according to some embodiments, the description of the perceived object is contained in perceived object container of a CPM generated by the originating ITS-S.

Still according to some embodiments, the obtained indication is representative of an inconsistency between the first item of information and the second item of information and the descriptions of the first and the second perception regions belong to a same segment of a CPM.

Still according to some embodiments, the obtained indication is representative of an inconsistency between the first item of information and the second item of information and the descriptions of the first and the second perception regions belong to different segments of a same CPM.

Still according to some embodiments, the obtained indication is representative of an inconsistency between the first item of information and the second item of information and each of the descriptions of the first and the second perception regions comprises a list of identifiers of perceived objects and a number of perceived objects.

Still according to some embodiments, the obtained indication is representative of an inconsistency between the first item of information and the third item of information and the description of the perceived object and the description of the first perception region belong to a same CPM.

Still according to some embodiments, the obtained indication is representative of an inconsistency between the first item of information and the third item of information and the description of the perceived object and the description of the first perception region belong to different CPMs.

Still according to some embodiments, the obtained indication is representative of an inconsistency between the first item of information and the third item of information, the description of the first perception region comprises a list of identifiers of perceived objects and a number of perceived objects and the description of the perceived object comprises physical properties of the perceived object.

Still according to some embodiments, the obtained indication comprises a type of improper behaviour.

Still according to some embodiments, the inconsistency is directed to an object missing in the description of the first perception region, to an extra object in the description of the first perception region, or to an incorrectly located object in the descriptions of the first and second perception regions.

Still according to some embodiments, the inconsistency is further determined as a function of object properties.

Still according to some embodiments, the inconsistency is further determined as a function of a format of the description of the first perception region.

According to a second aspect of the disclosure, there is provided a method, in an Intelligent Transport System, ITS, of detecting a misbehaving originating ITS station, ITS-S, the method comprising:
receiving a Collective Perception Message, CPM, generated by the originating ITS-S,
the CPM comprising a perception region container comprising a description of a first perception region; and
detecting an improper behaviour of the originating ITS-S by determining an inconsistency between a first item of information of the description of the first perception region and a second item of information of a description of a second perception region in a perception region container of a CPM generated by the originating ITS-S or by determining an inconsistency between the first item of information and a third item of information of a description of a perceived object in relation to the first perception region.

Accordingly, the method of the disclosure makes it possible to detect and/or report malfunctioning entities in C-ITS, using perception region information in Collective Perception Messages (CPMs), to avoid hazardous situations and/or overloading of the communication network, leading to improve trust in ITS messages in general.

According to some embodiments, the improper behaviour of the originating ITS is detected by determining an inconsistency between the first item of information and the second item of information and the descriptions of the first and the second perception regions are received in different segments of the same received CPM.

Still according to some embodiments, the improper behaviour of the originating ITS is detected by determining an inconsistency between the first item of information and the third item of information and the description of the first perception region and the description of the perceived object are received in different CPMs.

Still according to some embodiments, the method further comprises ignoring the received CPM upon detecting the improper behaviour of the originating ITS-S.

According to a third aspect of the disclosure, there is provided a method, in an Intelligent Transport System, ITS, of identifying a misbehaving originating ITS station, ITS-S, the method comprising:
receiving a report comprising an indication representative of an inconsistency between a first item of information of a description of a first perception region and a second item of information of a description of a second perception region, each of the descriptions of the first and second perception regions being contained in a perception region container of a Collective Perception Message, CPM, generated by the originating ITS-S, or
representative of an inconsistency between the first item of information and a third item of information of a description of a perceived object in relation to the first perception region; and
identifying the misbehaving originating ITS-S as a function of the indication.

Accordingly, the method of the disclosure makes it possible to detect and/or report malfunctioning entities in C-ITS, using perception region information in Collective Perception Messages (CPMs), to avoid hazardous situations and/or overloading of the communication network, leading to improve trust in ITS messages in general.

According to some embodiments, the method further comprises notifying an appropriate authority about the misbehaving originating ITS-S.

According to a fourth aspect of the disclosure, there is provided a misbehaviour report to transmit information in an Intelligent Transport System, ITS, comprising an indication representative of an inconsistency between a first item of information of a description of a first perception region and a second item of information of a description of a second perception region, each of the descriptions of the first and second perception regions being contained in a perception region container of a Collective Perception Message, CPM, generated by an originating ITS-S, or representative of an inconsistency between the first item of information and a third item of information of a description of a perceived object in relation to the first perception region.

Accordingly, the misbehaviour report of the disclosure makes it possible report malfunctioning entities in C-ITS, using perception region information in Collective Perception Messages (CPMs), to avoid hazardous situations and/or overloading of the communication network, leading to improve trust in ITS messages in general.

According to another aspect of the disclosure there is provided a device comprising a processing unit configured for carrying out each of the steps of the method described above.

This aspect of the disclosure has advantages similar to those mentioned above.

At least parts of the methods according to the disclosure may be computer implemented. Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present disclosure may take the form of a computer program product embodied in any tangible medium of expression having computer usable program code embodied in the medium.

Since the solutions of the present disclosure can be implemented in software, the solutions of the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid-state memory device and the like. A transient carrier medium may include a signal such as an electrical signal, an electronic signal, an optical signal, an acoustic signal, a magnetic signal or an electromagnetic signal, e.g., a microwave or RF signal.

### BRIEF DESCRIPTION OF THE DRAWINGS

Further advantages of the present disclosure will become apparent to those skilled in the art upon examination of the drawings and detailed description. Embodiments of the disclosure will now be described, by way of example only, and with reference to the following drawings, in which:
**Figure 1** illustrates an example of an ITS 100 wherein CPMs having a perception region container may be generated and transmitted, in which some embodiments of the present disclosure may be implemented;
**Figure 2a** illustrates a schematic representation of the architecture (or of a portion of the architecture) of an ITS station generating CPMs;
**Figure 2b** illustrates a schematic representation of the architecture (or of a portion of the architecture) of an ITS station configured for receiving and analysing CPMs and for generating misbehaviour reports;
**Figure 2c** illustrates a schematic representation of the architecture (or of a portion of the architecture) of an ITS station configured for receiving and analysing misbehaviour reports and for generating messages to appropriate entities;
**Figure 3** illustrates an example of a structure of a Collective Perception Message, CPM;
**Figure 4** illustrates an example of steps of an algorithm for detecting misbehaviour upon reception of a CPM;
**Figure 5** illustrates an example of steps of an algorithm for concatenating CPMs;
**Figure 6** illustrates an example of steps of an algorithm for analysing consistency between CPM perception region instances and predetermined rules;
**Figure 7** illustrates an example of steps of an algorithm for identifying dominating and dominated regions and for crosschecking regions with each other and with the sensor FoVs to identify shape and/or position inconsistencies;
**Figure 8** illustrates an example of steps of an algorithm for recovering objects;
**Figure 9** illustrates an example of steps of an algorithm for comparing physical properties of objects to physical properties of the regions that contain these objects;
**Figure 10** illustrates an example of steps of an algorithm for checking temporal consistency of CPMs;
**Figure 11** illustrates the misbehaviour report format, as defined in the ETSI Misbehaviour Reporting Service;
**Figure 12** illustrates an example of steps of an algorithm for generating a misbehaviour report;
**Figure 13** illustrates an example of steps of an algorithm for receiving and processing a misbehaviour report; and
**Figure 14** is a schematic representation of an example of a communication ITS-S device configured to implement some embodiments of the present disclosure.

### DETAILED DESCRIPTION OF THE DISCLOSURE

The names of the lists and elements (such as data elements) provided in the following description are only illustrative. Embodiments are not limited thereto and other names could be used.

It is recalled that Collective Perception Messages (CPMs) make it possible to describe objects detected in a given region by using the definition of a perception region. This typically enables an ITS agent to split a monitored area in different regions and to describe them separately in different Perception Regions, either in a single CPM or in distinct CPMs.

The inventors have observed that based on such regions, malicious users could try to overload communication channels by disrespecting standard rules, or to confuse road users by giving inconsistent information with other CPM containers or with other messages from the same source. For example, a malicious user could send CPMs with perception regions containing objects that do not exist, making a receiving ITS-S station believes that these objects are real and may change its road behaviour, becoming dangerous to other users. Also, a malicious user could try to put fake information in a CPM to overload communication channels and prevent other users to send messages on this medium. Inconsistencies in CPMs may also result from unintentional errors from a malfunctioning entity, with no malicious purpose. In this case, it is important to report these kinds of errors as well, at least to signal to the appropriate entities that the originating ITS-S is no longer trustworthy.

According to some embodiments of the disclosure, detecting an abnormal or improper behaviour of an originating ITS-S (i.e., a behaviour that is not expected according to an established norm, a rule, standards, etc.) is based on the description of perceived regions in a perception region container of Collective Perception Messages and comprises:
- checking compliance with standards (e.g., verifying the conformity of the values of the fields of the CPM perception region instance with ETSI standards),
- checking object properties (e.g., verifying the conformity of the values of the fields of the perception region instance with the values of object properties for objects listed in the CPM perceived object container), and/or
- checking the consistency between CPMs (e.g., verifying the consistency of perception region instances of several CPMs).

Such checks may be carried out using the following fields of a perception region instance:
- numbers of perceived objects and
- identifiers of perceived objects.

In addition, perception regions with a high confidence level on objects they contain are preferably considered.

An example of misbehaviour report ITS message format is disclosed to report about misbehaving ITS station regarding the description of perception regions in a CPM perception region container. This format follows the specification of the ETSI Misbehaviour Reporting Service.

### Intelligent Transport System

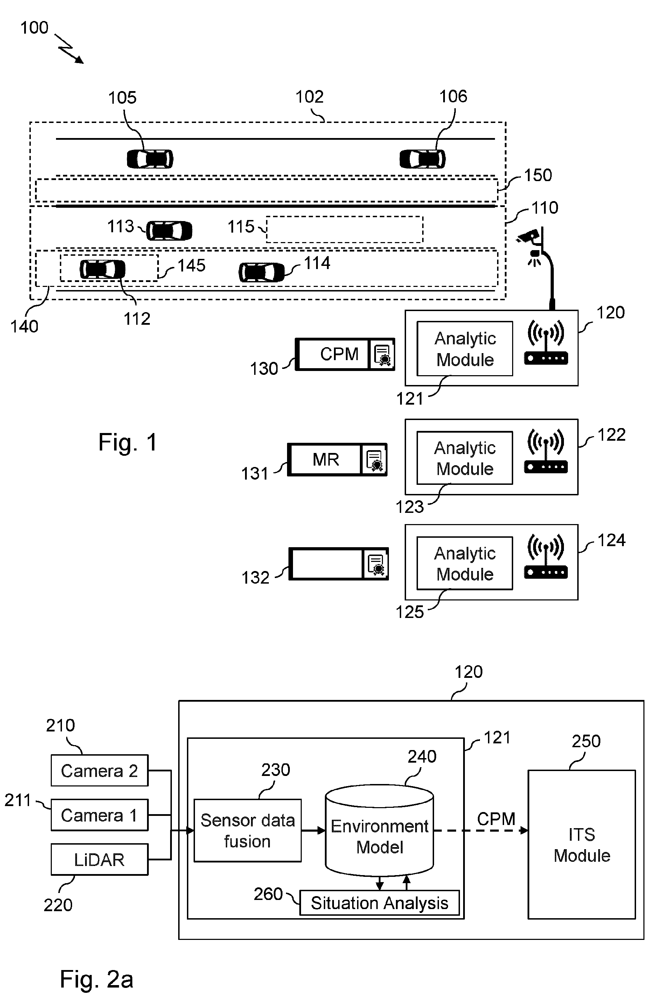

**Figure 1** illustrates an example of an ITS 100 wherein CPMs having a perception region container may be generated and transmitted, in which some embodiments of the present disclosure may be implemented.

As illustrated, ITS 100 is implemented near a 4-lane freeway having two lanes for vehicles going in one direction and two lanes for vehicles going in the opposite direction. The pairs of lanes are separated in the middle by a barrier. According to the illustrated example, vehicle in the bottom lanes go from left to right (e.g., vehicles 112, 113, and 114), while vehicles in the top lanes go from right to left (e.g., vehicles 105 and 106).

The area represented in Figure 1 is monitored by an ITS station referenced 120 that comprises a Road Side Unit (RSU) and which is associated with a set of sensors, such as one or more cameras, LIDARs, and/or radars. These sensors are used to monitor the traffic, especially to identify vehicles, pedestrians, and possibly other kinds of objects, thanks to analytic modules, for example analytic module 121. These analytic modules are used to determine a list of objects that may be described in CPMs, for example in CPM 130, generated and transmitted by ITS station 120.

Other ITS-Ss of the ITS 100, for example an ITS-S associated with a vehicle, may generate and transmit CPMs.

According to some embodiments, the RSU, an ITS-S, for example ITS-S 122 comprising analytic module 123, or a specialized device is in charge of analysing CPMs previously received and of detecting potential misbehaviour. If misbehaviour is detected, a misbehaviour report, for example Misbehaviour Report (MR) 131, is generated and sent to a central ITS-S, for example central ITS-S 124 comprising analytic module 125, which analyses misbehaviour reports to forewarn a Misbehaviour Authority (MA) in case of misbehaviour, for example using message 132. According to particular embodiments, the central ITS-S belongs to a Misbehaviour Authority.

According to the illustrated example, the area that is monitored by ITS station 120 comprises six regions that are defined as follows:
- region 102 corresponding to the two upper lanes,
- region 110 corresponding to the two lower lanes,
- region 115 corresponding to a portion of the upper lane of region 110,
- region 140 corresponding to the whole lowest lane of region 110,
- region 145 corresponding to a portion of the lowest lane of region 110, and
- region 150 corresponding to the whole lowest lane of region 102.

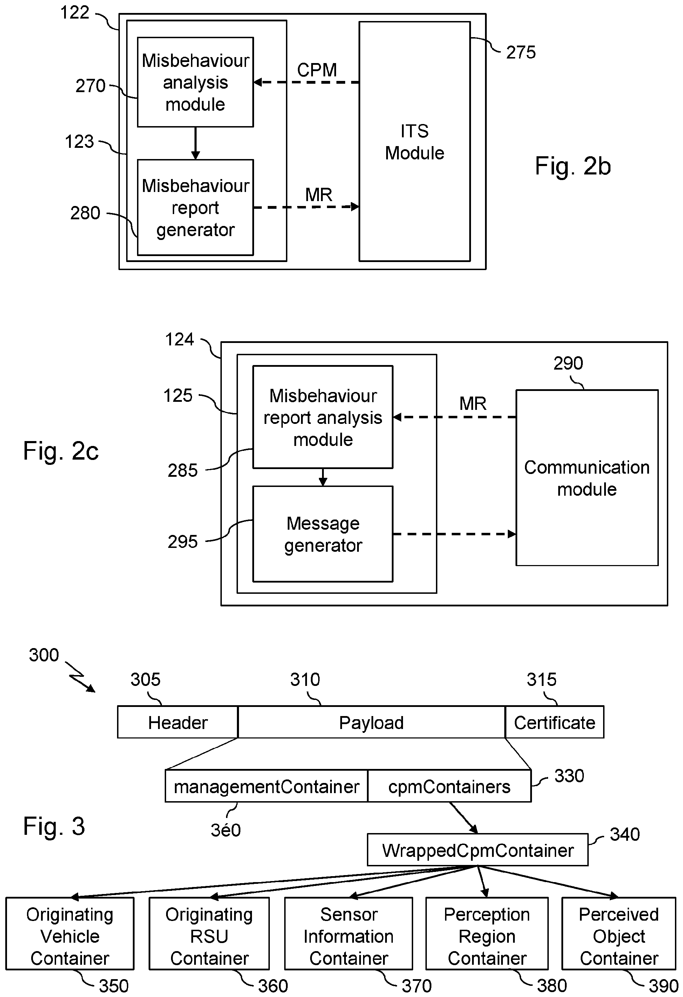

Accordingly, region 150 overlaps region 102, regions 140 and 115 overlap region 110, and region 145 overlaps regions 140 and 110. These regions are taken into account when a CPM is generated: each region is described in its own instance of the perceptionRegion datafield in the perceptionRegion container, as allowed by the CPM specification and described by reference to Figure 3.

For the sake of clarity, "the instance of a perception region", "the perception region instance", or "the perceptionRegion instance" is used to designate "the instance of the perception region datafield contained in the perception region container". Similarly, "the instance of a perceived object", "the perceived object instance", or "the perceivedObject instance" is used to designate "the instance of the perceived object datafield contained in the perceived object container".

In addition, "perceptionRegionContainer", "perceptionRegion container", or "Perception Region Container" is used to designate the perception region container.

Similarly, "perceivedObjectContainer", "perceivedObject container", or "Perceived Object Container" is used to designate the perceived object container.

It is observed that the CPM specification defines dominating regions and dominated regions when regions overlap, in order to reduce communication channel load. A region overlapping another previously defined region, that is totally included in this other region, is referred to as the dominating region, the other region being the dominated region. When describing the regions, a list of identifiers of perceived objects (perceivedObjectlds) is provided in the dominating region rather than in a dominated region. However, the number of perceived objects (numberOfPerceivedObjects) are indicated in the dominating regions and in the dominated regions, as described by reference to Figure 3.

For the sake of illustration, regions 140 and 115 are defined as being dominating regions over regions 110 and region 145 is defined as being a dominating region over region 140. Therefore, when being described in a perceptionRegion instance, region 140 is described as containing two perceived objects and as containing an identifier of perceived object 114. Its description does not include an identifier of object 112 since object 112 is contained in region 145 that is dominating region 140. In turn, a perceptionRegion instance is used to described region 145, to indicate that it contains one perceived object and to provide an identifier of perceived object 112. Likewise, since region 110 is dominated by regions 115, 140, and 145, a perceptionRegion instance of a CPM describing this region should not list an identifier of perceived objects 112 and 114 (as they are listed in perceptionRegion instances associated with regions 140 and 145) but should list an identifier of perceived object 113 that does not belong to regions 115, 140, and 145. The number of perceived objects that should be associated with region 110 is three (corresponding to objects 112, 113, and 114).

It is observed here that region 140 is both a dominating region and a dominated region. Likewise, regions 102 and 110 are dominated regions since there comprise dominating regions (e.g., regions 115, 140, and 150) and are dominating regions since they comprise perceived objects that do not belong to corresponding dominating regions (e.g., perceived objects 105, 106, and 113).

It is also possible to describe regions that do not comprise any object. For example, regions 150 and 115 are regions which should be described with an empty list of perceived objects and with a number of perceived objects set to zero.

Table 1 in the Appendix illustrates a description of the six regions represented in Figure 1 with a list of perceived object identifiers and a number of perceived objects for each region.

It is observed that regions that do not overlap (e.g., regions 102 and 110 do not overlap) are not necessarily described in each CPM message, as allowed by the CPM specification. For instance, it may happen that a single region is described in a given CPM, while another non-overlapping region is described in a following CPM.

### ITS stations

**Figure 2a** illustrates a schematic representation of the architecture (or of a portion of the architecture) of an ITS station generating CPMs, for example the ITS station 120 comprising the analytic module 121 as illustrated in Figure 1.

As described above, analytic module 121 is connected to one or more sensors, for example two cameras 210 and 211 and a LIDAR 220, as illustrated. The sensors may be located nearby the road for a roadside ITS-S or may be embedded inside a vehicle. In such a case, the sensors may also include a Global Navigation Satellite System (GNSS), an Inertial Measure Unit (IMU), or the like to obtain a position or an approximate position of the ITS-S.

Objects detected by each sensor are analyzed by the sensor data fusion module 230. This module can fuse objects detected by several sensors if there is enough confidence that there are the same objects (by analysis of their object type, position, speed, trajectory etc.). Newly detected objects or updates directed to tracked objects are used to update the environment model 240.

Environment model 240 contains a list of objects and, for each object, items of information such as the following:
- a unique object identifier making it possible to track the object,
- the time at which information about the object was obtained from the sensors,
- a list of the sensors that have perceived the object,
- the object relative distance and speed from the ITS-S reference position with a corresponding confidence level,
- the object type (e.g., vehicle, pedestrian, etc.) with a corresponding confidence level,
- an associated ITS station identifier with a corresponding confidence level.

In the case of a moving ITS-S, for example an ITS-S embedded within a vehicle or carried by a pedestrian, the sensors may also be used to determine the position of the ITS-S. For example, a GNSS or an IMU may be used to obtain a position or an approximate position at a few meters accuracy in case of a classical GNSS. A high precision GNSS may be used but because of their relatively high cost, few stations may have a precise absolute position (e.g., at a few tenths of centimetres). Other sensors (like cameras) may also be used to determine relative position of the ITS-S compared to road signalization such as road marking or road signs. This item of information may then be used to compute precisely the relative position of a vehicle inside a road lane and to know on which road lane the vehicle is positioned.

Optionally, sensor data fusion module 230 may receive ITS message information extracted from CAM ITS messages received by the ITS station 120 through its ITS Module 250. As for the local sensor data fusion, if there is enough confidence that an object perceived by local sensors is corresponding to the ITS-S that has transmitted the CAM, then the corresponding ITS station ID contained in the CAM message is associated with the tracked object in the environment model. The sensor data fusion module 230 computes a confidence level to the ITS ID association. For example, it may be computed based on the accuracy of the position contained in the CAM and the one measured by the local sensors. As another example, it may be computed based on the number of perceived objects versus the number of transmitting ITS-Ss for a zone.

Based on environment model 240, a set of relevant perception regions may be defined in Situation Analysis 260 according to the CPM specification. Then, CPM messages are generated and emitted by the ITS Module 250. Such messages may be periodically transmitted. They contain a list of perceived objects from the environment model. In the context of the disclosure, such CPMs preferably describe at least one perception region, with the corresponding perceived objects.

**Figure 2b** illustrates a schematic representation of the architecture (or of a portion of the architecture) of an ITS station configured for receiving and analysing CPMs and for generating misbehaviour reports, for example the ITS station 122 comprising the analytic module 123 as illustrated in Figure 1. ITS station 122 may receive CPMs thanks to an ITS module, for example ITS module 275. It may have the authorizations to perform misbehaviour analysis and send misbehaviour reports thanks to the appropriate application id (aid) and service specific permissions (ssp).

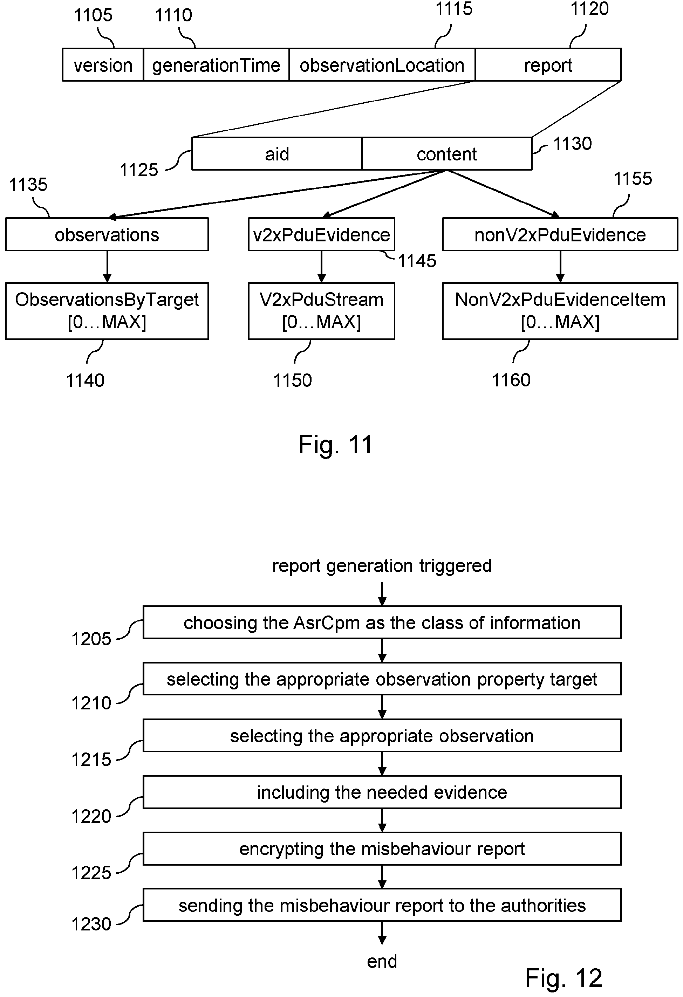

As illustrated, analytic module 123 comprises a misbehaviour analysis module referenced 270 that is in charge of analysing the received CPMs in order to detect misbehaviour. If misbehaviour is detected, a misbehaviour report is generated in the misbehaviour report generator module 280. The generated misbehaviour report may conform the ETSI specification, as described by reference to Figure 11 for the message format and to Figure 12 for the report generation algorithm. A generated misbehaviour report is transmitted by ITS module 275 to appropriate entities, e.g., to Misbehaviour Authority (MA) 124 in Figure 1.

**Figure 2c** illustrates a schematic representation of the architecture (or of a portion of the architecture) of an ITS station configured for receiving and analysing misbehaviour reports and for generating messages to appropriate entities, for example the ITS station 124 comprising the analytic module 125 as illustrated in Figure 1. According to some embodiments, this station could be a Misbehaviour Authority (MA). ITS station 124 is may receive a misbehaviour report thanks to the communication module 290. It can be an ITS module, or a direct link (e.g., an Ethernet link). It may have the authorizations to receive misbehaviour reports, perform misbehaviour analysis and send misbehaviour reports thanks to the appropriate application id (aid) and service specific permissions (ssp).

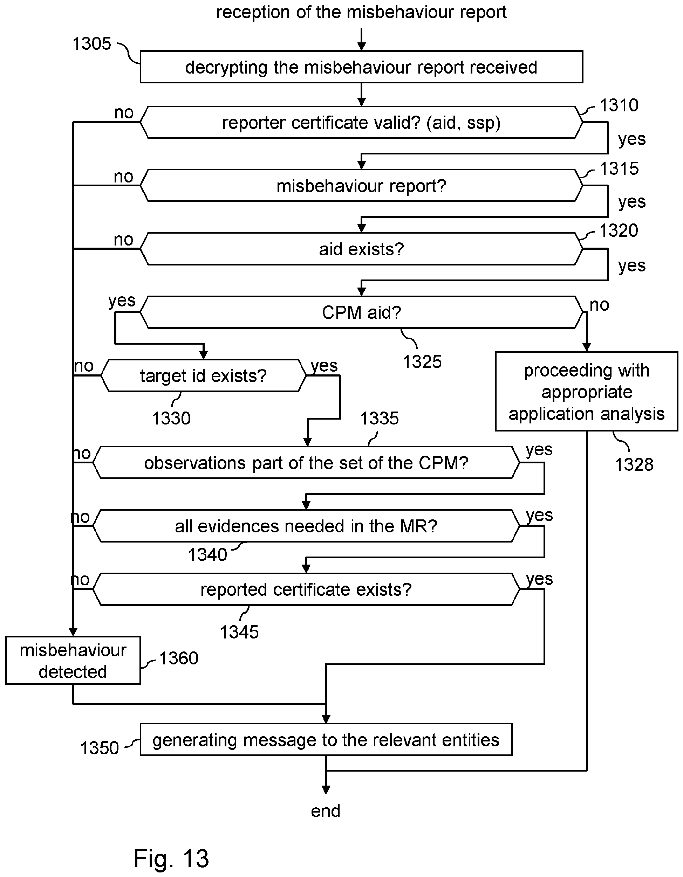

As illustrated, analytic module 125 comprises the misbehaviour report analysis module 285 that may verify the authenticity and the relevance of the report, as described with reference to Figure 13. If misbehaviour is to be taken into consideration, message generator module 295 generates a message which is sent to appropriate entities (e.g., to road operators, police, certificate authorities, local infrastructure unit, etc.) thanks to communication module 290.

### Collective Perception Message (CPM)

**Figure 3** illustrates an example of a structure of a Collective Perception Message, CPM 300.

The illustrated CPM structure is based on ETSI TS 103 324 specification. It comprises an ITS Protocol Data Unit (PDU) header 305, a payload 310, and a Certificate 315. It is observed that the disclosure is not specific to this version of CPMs and may apply to different versions of CPMs. In particular, the disclosure may apply to CPMs containing data associated with at least one region.

Header 305 is a common header that includes information about the protocol version, the message type, and the ITS-S identifier (ID) of the originating ITS-S.

Payload 310 contains a management container referenced 320 and a cpmContainers component 330, which itself comprises a Wrapped CPM container 340. Wrapped CPM container 340 may contain various kinds of containers such as the following: Originating Vehicle Container 350 (which is present if the CPM is emitted by a vehicle), Originating RSU Container 360 (which is present if the CPM is emitted by an RSU), Sensor Information Container 370 (which describes information about the sensors used to generate the considered CPM), a Perception Region Container 380 (which contains some instances of the perceptionRegion datafield which describes some regions), and a Perceived Object Containers 390 (which describes the objects perceived through the sensors).

The items of information contained in the Perceived Object Containers 390 can be obtained from an environment model (e.g., environment model 240 in Figure 2a) of the ITS-S originating the CPM.

The items of information contained in the Perception Region Container 380 are prepared by a situation analysis module (e.g., situation analysis module 260 in Figure 2a). The regions may be generated dynamically or statically depending on the application. For example, an application that aims at monitoring a pedestrian cross-walking would define a static region around the crosswalk area.

As defined in TS 103 324 specification, in § 6.1, CPMs are generated during periodic CPM generation events. The time elapsed between the triggering of consecutive CPM generation events is equal to T_GenCpm, that is comprised between T_GenCpmMin and T_GenCpmMax. During each generation event, the inclusion of the SensorlnformationContainer, PerceivedObject, and Perception Region are determined based on inclusion rules. Based on these inclusion rules, each generation may result in the generation of none, one or a set of CPMs. In the case where the data to be transmitted in a CPM exceed a maximum size (MTU_CPM) for a CPM, these data are transmitted in a set of CPMs, also called CPM segments.

The management container includes the component referenceTime and reference Position. The referencePosition refers to the position of the ITS-S disseminating the CPM. The management container includes information about the data segment contained in the CPM as part of the component messageSegmentlnfo, if more than one CPM is assembled from the data selected for transmission.

The Sensor Information Container lists information about individual sensors or sensor systems which originated the perceived object information using the type Sensorlnformation. Sensorlnformation includes the following items of information:
- a component sensorld that is used in the PerceivedObjectContainer to connect information about an object to the sensor that provided that information,
- a component sensorType that provides the type of sensor,
- a component perceptionRegionShape that defines the shape of the perception area of the sensor, it is specified as a geographical area or volume with respect to the reference position,
- a component perceptionRegionConfidence that describes the sender's confidence level for correctly detecting objects and unoccupied subregions present in a perception region, and
- a component shadowingApplies that indicate the application of the shadowing mechanism within the given perceptionRegionShape. If the perceptionRegionConfidence provided in Sensorlnformation is not valid for shadowed regions in the given perceptionRegionShape, shadowingApplies is set to "True" for this Sensorlnformation. If the perceptionRegionConfidence provided in Sensorlnformation is also valid for shadowed regions in the given perceptionRegionShape, shadowingApplies is set to "False" for this SensorInformation.

It is observed that not all objects known to a transmitter are reported in every CPM. The receiver therefore has to ensure that suitable tracking and prediction mechanisms for previously transmitted objects are employed to update the shadowed region accordingly.

It is also observed that the perception capabilities specified in the Sensorlnformation (i.e. perceptionRegionShape, perceptionRegionConfidence, shadowingApplies) can be detailed or overruled using Perception Region.

A Perception Region Container lists information about perception regions using the type Perception Region. Perception Region is a datafield which includes the components measurementDeltaTime, perceptionRegionConfidence, and perceptionRegionShape for a specific perception region. It is observed that a PerceptionRegion can be used to indicate a perceptionRegionConfidence different from the perceptionRegionConfidence given in the Sensorlnformation, or to mark regions where the shadowing model does not apply for a particular. The component perceptionRegionShape is specified as a geographical area or volume with respect to the reference position (in case of a vehicle ITS-S disseminating the CPM) or a reference point (in case of a roadside ITS-S disseminating the CPM) in the East-North-Up coordinate system. Additionally, a Perception Region can be used to divide the perception region of a sensor into smaller parts, e.g. in case more than one CPM needs to be assembled. Perception Region includes the component shadowingApplies to indicate the application of the shadowing mechanism within the given perceptionRegionShape. The shadowingApplies applies for the Perception Region as stated for the Sensorlnformation. Perception Region may include the component sensorldList. If present, sensorldList lists the values of the component sensorld of the sensors described in the Sensorlnformation which are involved in perceiving the region.

Perception Region may include the component (or field) numberOfPerceivedObjects. If present, numberOfPerceivedObjects contains the number of all currently perceived objects in the PerceptionRegion. PerceptionRegion may include the component (or field) perceivedObjectlds. If present, perceivedObjectlds lists the values of the component (or field) objectld of all perceived objects that are contained in PerceptionRegionShape that are not dominated by any other PerceptionRegion. Thus, each objectld is contained in at most one Perception Region, while the value of numberOfPerceivedObjects may be higher than the number of elements in perceivedObjectlds.

For the sake of clarity, "an entry of the perceivedObjectlds" is used to designate an element part of the perceveidObjectlds list (or field).

The Perceived Object Container includes the component numberOfPerceivedObjects, describing the total number of perceived objects contained in the Local Dynamic Map (environment model) at the time of generating the CPM. It is observed that depending on the message generation rules and the associated object inclusion scheme, the number of objects described in a CPM may be different from the value of numberOfPerceivedObjects.

The Perceived Object Container includes the component perceivedObjects to provide information about each detected object that is selected for transmission. Each selected perceived object is described in a perceivedObject datafield with information about its kinematic state and attitude vector in a predefined coordination system and with respected to a referenceTime defined in the management container. It includes the following components (or fields):
- objectld which is a unique identifier assigned to the object (unique at the level of the CPM sender),
- measurementDeltaTime that represents the time difference from the reference time to the time of measurement of the object,
- position that represents the position of the object within the predefined coordinate system,
- velocity (optional) that is the velocity vector of the object within the pre-defined coordinate system,
- acceleration (optional), that is the acceleration vector of the object within the pre-defined coordinate system,
- angles (optional) that represent the Euler angles of the object bounding box at the time of measurement,
- zAngularVelocity (optional) that is the angular velocity of the object around the z-axis at the time of measurement,
- lowerTriangularCorrelationMatrices (optional) that is a set of lower triangular correlation matrices for selected components of the provided kinematic state of attitude vector,
- objectDimensionZ (optional) that is the z-dimension of the object bounding box,
- objectDimensionY (optional) that is the y-dimension of the object bounding box,
- objectDimensionX (optional) that is the x-dimension of the object bounding box,
- objectAge (optional) that is the age of the detected object (the difference in time between the moment it has been first detected and the reference time of the message, the maximum value is 1.5s),
- objectPerceptionQuality (optional) that represents the confidence associated to the object,
- sensorldList (optional) that that lists the identifiers of the sensors which provided the measurement data,
- classification (optional) that is a classification of the described object (type of the object such as VRU, vehicle, etc), and
- mapPosition (optional) that that indicates a position on a topology description transmitted according to MAPEM ITS message (according to TS 103 301 specification).

The CPM specification has defined rules for the inclusion of each container in a CPM at the next generation event. The goal is to keep the communication channel with a reasonable load.

A CPM includes a SensorlnformationContainer in the first generated CPM and whenever the time elapsed since the last time a CPM included a SensorlnformationContainer is equal or greater than T_AddSensorlnformation (which default value is one second).

A CPM includes a perception region whenever the sender detects relevant deviations of the available dynamic perception capabilities (perceptionRegionShape, perceptionRegionConfidence, shadowingApplies) with respect to the static perception capabilities described in the Sensor Information Container or previously included Perception Region Containers. If two perception regions overlap and involve the same sensor (as described in the sensorldList of the Perception Region), the perception region instance added later to the PerceptionRegionContainer is referred to as a dominating region, i.e. it defines the perception region confidence and the shadowingApplies value of the intersection between the two regions. Additionally, perceived objects are only referenced in the component perceivedObjectlds in the most dominating region at the reference location of the object. As described above, the other region is called the dominated region. To reduce the load on the communication channel, the number of Perception Region instances in the Perception Region Container is limited to MaxPerceptionRegions and the amount of data contained in the Perception Region Container is limited so that the Sensor Information Container and the Perception Region Container may fit into one CPM.

A CPM includes available information about perceived objects inside the perceivedObjectContainer using one instance of PerceivedObject per object in accordance with their type.

The perceived object inclusion rules depend on the object type and on the object perception quality. Two object types are defined based on the object class with the highest classification confidence as follows:
- Type-A objects are objects of class vruSubclass with a VRU profile pedestrian, bicyclistAndLightVruVehicle or animal or class groupSubclass or otherSubclass and
- Type-B objects are objects of any class not included in Type-A (i.e. objects of class vehicleSubclass, or vruSubclass with a VRU profile motorcyclist).

An object whose object perception quality exceeds ObjectPerceptionQualityThreshold is selected for transmission from the object list as a result of the current CPM generation event if the object complies to any of the following conditions:
- if the object is of Type-A:
   - the object has first been detected by the perception system after the last CPM generation event or
   - if the object list contains at least one object of Type-A which has not been included in a CPM for a time equal or larger than T_GenCpmMax/2, all objects of Type-A should be included in the currently generated CPM,
- if the object is of Type-B:
   - the object has first been detected by the perception system after the last CPM generation event,
   - the Euclidean distance between the current estimated position of the reference point of the object and the estimated position of the reference point of this object lastly included in a CPM exceeds minPositionChangeThreshold,
   - the difference between the current estimated ground speed of the reference point of the object and the estimated absolute speed of the reference point of this object lastly included in a CPM exceeds minGroundSpeedChangeThreshold,
   - the orientation of the object's estimated ground velocity at its reference point has changed by at least minGroundVelocityOrientationChangeThreshold since the last inclusion of the object in a CPM, or
   - the time elapsed since the last time the object was included in a CPM is equal or larger than T_GenCpmMax.

All container data selected for inclusion in a CPM are assembled and encoded for transmission using ASN.1 encoder. When the encoded data exceeds a maximum size (MTU_CPM), a set of CPMs (or CPM segments) are generated, all having the same reference time.

CPM assembly is performed taking these size constraints into account by following one of the following configuration-specific assembly mechanisms:
- if the configuration parameter MessageAssemblyConfig is set to "0", the CPM assembly is performed based on an object utility function and
- if the configuration parameter MessageAssemblyConfig is set to "1", the CPM assembly is performed based on the perception regions selected for inclusion.

If the SensorlnformationContainer or the Perception Regions needs to be transmitted, it is added to the first CPM generated for transmission.

Perceived objects selected for transmission are included in CPMs in a descending priority order following a per-object utility function based on the following parameters: object perception quality, object position change, object speed change, object orientation change, and object last inclusion time.

In the case where the SensorlnformationContainer also needs to be transmitted, it is added to the first CPM transmitted.

Every set of overlapping perception regions and the objects selected for inclusion contained within these regions are included into the same CPM segment. If the MTU_CPM does not allow to transmit this set of information in the same CPM segment, the regions are divided into smaller regions, so that each separate region and the corresponding perceived objects contained within them fit into one CPM segment.

As long as the resulting ASN.1 UPER encoded CPM to be generated does not exceed MTU_CPM a CPM should be populated in arbitrary order with perception regions and the corresponding perceived objects selected for transmission within these regions in the same CPM and with perceived objects that are not contained in any of the transmitted perception regions. These perceived objects are added in the order as defined in object utility function assembly method, and may be spread over several assembled CPMs.

Based on the previous description of CPM structure and of inclusion rules, the inventors have observed that there are some relationships between the data contained in the various containers, especially between the perception regions and the perceived objects. Accordingly, detecting and reporting misbehaviour may be based on the CPM structure and on these relationships as follows:
- verification at a CPM segment level,
- verification at a set of CPM segments corresponding to the same reference time, and
- verification of a set of successive CPMs originated from the same source

### Detecting misbehaviour from CPMs

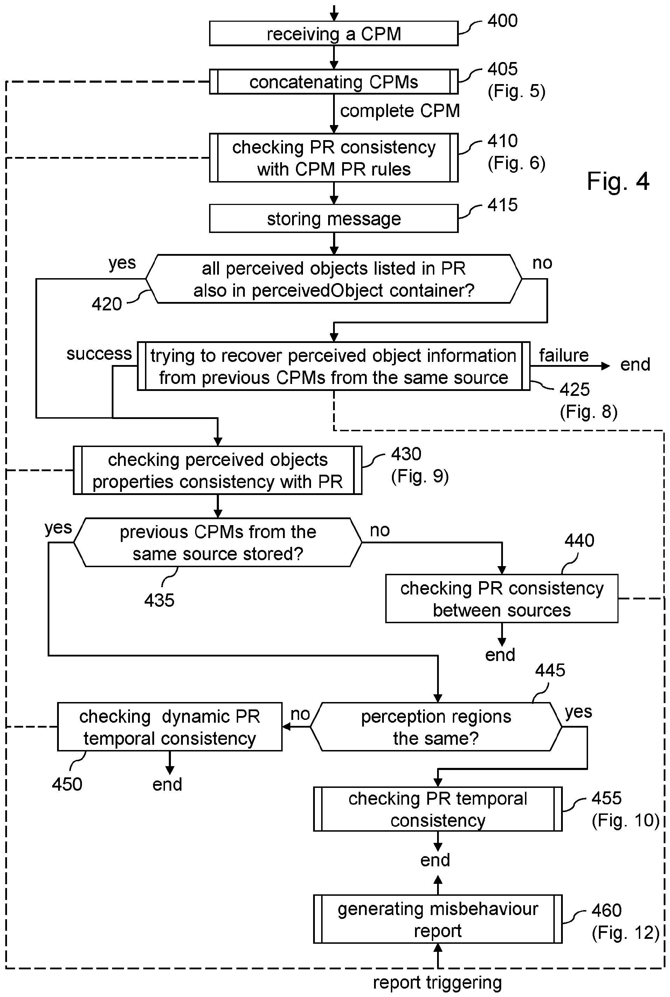

**Figure 4** illustrates an example of steps of an algorithm for detecting misbehaviour upon reception of a CPM.

As illustrated, a first step is directed to receiving a CPM (step 400). As described by reference to Figure 2b, the CPM may be received by an ITS-S through its ITS module.

Then, if the CPM is a segment of a larger CPM, it is concatenated with one or more other segments to recreate a complete (or concatenated) CPM(step 405). This may be done by a misbehaviour analysis module. Indeed, as described with reference to Figure 3, a complete CPM may be segmented in a set of CPMs, following CPM assembly rules. In such a case, these segments of CPMs contain part of the information and should be assembled together in order to reconstruct the entire scene. Concatenation of segments may be done on the basis that segments of a larger CPM have the same referenceTime indicated. If they have a different referenceTime, then they are not segments of the same set of CPMs and should not be concatenated. It should be noted that a complete CPM may be received at once. In such a case, there is no need for concatenation with other messages.

During step 405, it is also checked whether the complete received CPM or the segments of a complete CPM respect the CPM format rules. This may be done by comparing the content of the perceptionRegion (PR) instances with the assembly rules of the specification. If the CPM format rules are not respected, the emitting station is considered misbehaving and its CPMs may be ignored. In addition, the generation of a misbehaviour report is triggered and relative information is provided to a misbehaviour report generator which generates a misbehaviour report as described with reference to step 460 and by reference to Figure 12. More generally, each time an inconsistency is detected, the generation of a misbehaviour report is triggered and relative information is sent to the misbehaviour report generator. Step 460 is in charge of generating a misbehaviour report as specified in ETSI specification, with observations and related V2X evidence (typically, the messages received) or non-V2X evidence.

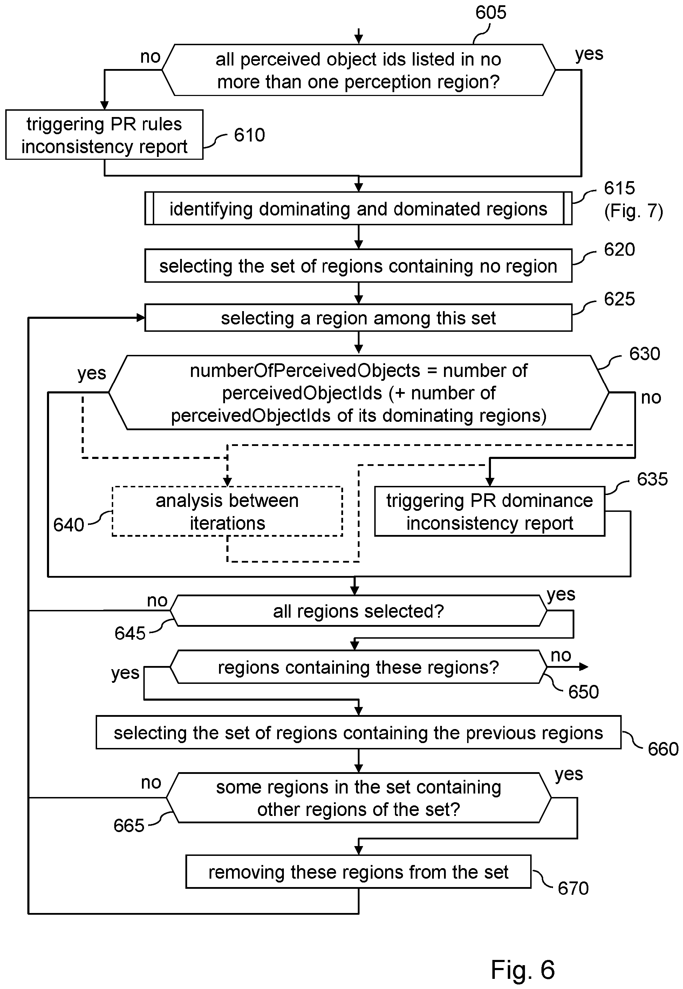

The CPM received at step 400 (if it is a complete CPM) or the concatenated message is then analysed to verify whether the perception regions contained into the message are respecting the specification rules of the perception regions, as described with reference to Figure 6. This step may comprise a list of tests to be carried out on the perceivedObjectlds and numberOfPerceivedObjects fields. If they do not respect the specification rules, the ITS-S which originated the CPM (also called the originating ITS-S) is considered to be misbehaving and a report generation is triggered (step 460). The regions which are not respecting the specification are deleted.

The message is then stored (step 415) for future usage.

It should be noted that at this point, all messages used in the next steps of the algorithm are complete CPMs (also called concatenated CPMs or CPMs). Therefore, it is assumed that all the segments of a complete CPM have been received.

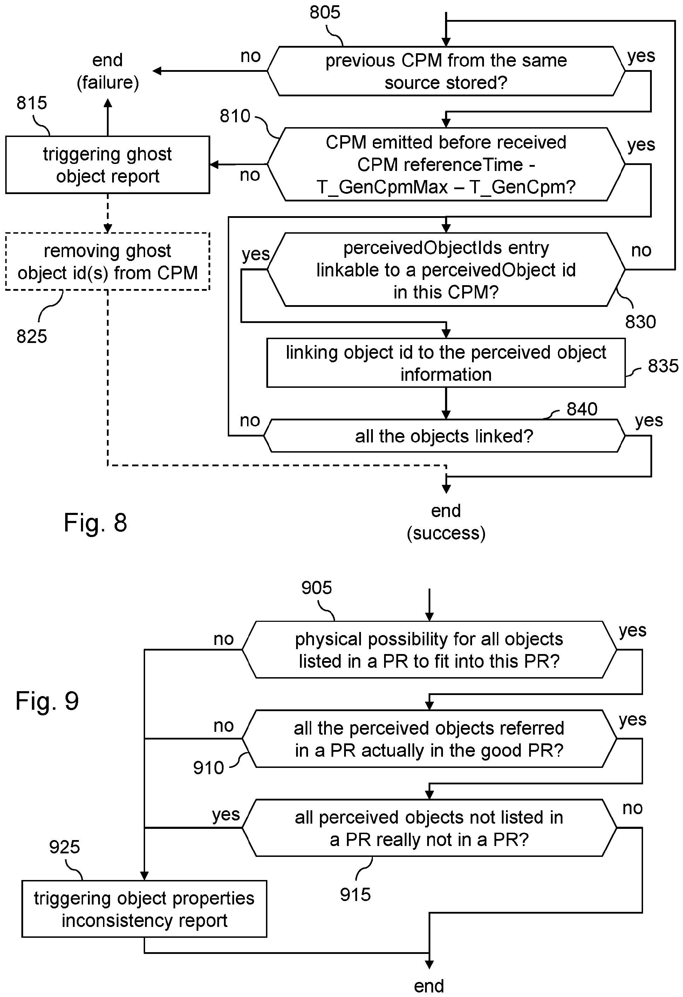

Next, in step 420, a test is carried out to check whether all the entries of the perceivedObjectlds field indicated in the perceptionRegion instances of the perceptionRegionContainer are referring to objectld fields in the perceivedObject instances listed in the PerceivedObjectContainer. If all the perceivedObjectlds entries indicated in the perceptionRegion instances of the perceptionRegionContainer are referring to objectld fields in the perceivedObject instances listed in the PerceivedObjectContainer, the algorithm moves on to step 435. On the contrary, if all the perceivedObjectlds entries indicated in the perceptionRegion instances of the perceptionRegionContainer are not referring to objectld fields in the perceivedObject instances listed in the PerceivedObjectContainer, it may mean that some of the objects (or all) were described in a previous CPM (since an object can be omitted of a CPM for a certain time as specified in the specification). In this case, the algorithm tries to recover the object properties through previous CPMs of the same source (step 425) if they exist, by linking the object identifiers listed in the perception regions to object identifiers listed in the perceived object container, as described with reference to Figure 8. During this step, objects that are not present in an existing recent CPM should be considered as ghost objects, meaning that their identifiers are listed in a perceptionRegion instance but are referencing objects that have never been described in the perceivedObject container. In such a case, the emitter is considered to be misbehaving and a report generation is triggered. This step may be stopped if a ghost object is detected or, optionally, the identifier of the ghost object may be deleted and the step continues with the remaining objects (if any). If the algorithm fails to recover all objects, the algorithm may end or may continue with step 430. If it succeeds to recover all object properties, the algorithm continues with step 430.

In step 430, described in more detail with reference to Figure 9, the properties (e.g., the size and/or the position) of the perceived objects contained in the perception regions are compared with the properties of these regions. For example, it may be determined whether all objects indicated in a region actually physically fit in the region according to its defined shape and size. If an inconsistency is detected, the emitter is considered to be misbehaving and a report generation is triggered.

Next, a test is carried out to determine whether there are other CPMs from the same source that are stored on the device (step 435). If there is not any other CPM from the same source that is stored on the device, the algorithm continues with step 440. On the contrary, if there are other CPMs from the same source that are stored on the device, the algorithm continues with step 445.

In step 440, perception regions from different sources are compared to each other in order to detect inconsistencies between sources. As the perception regions may not be the same, it may be required to compute intersection areas of the regions from the different sources. Furthermore, as the object identifiers should be different from one source to another, tracking mechanisms could be used as fusion mechanisms to match the objects from different sources. Next, some tests are carried out to check the consistency of objects in the regions from the different sources. If an inconsistency is detected, a misbehaviour report is triggered. On the contrary, if not any inconsistency is detected, the algorithm ends.

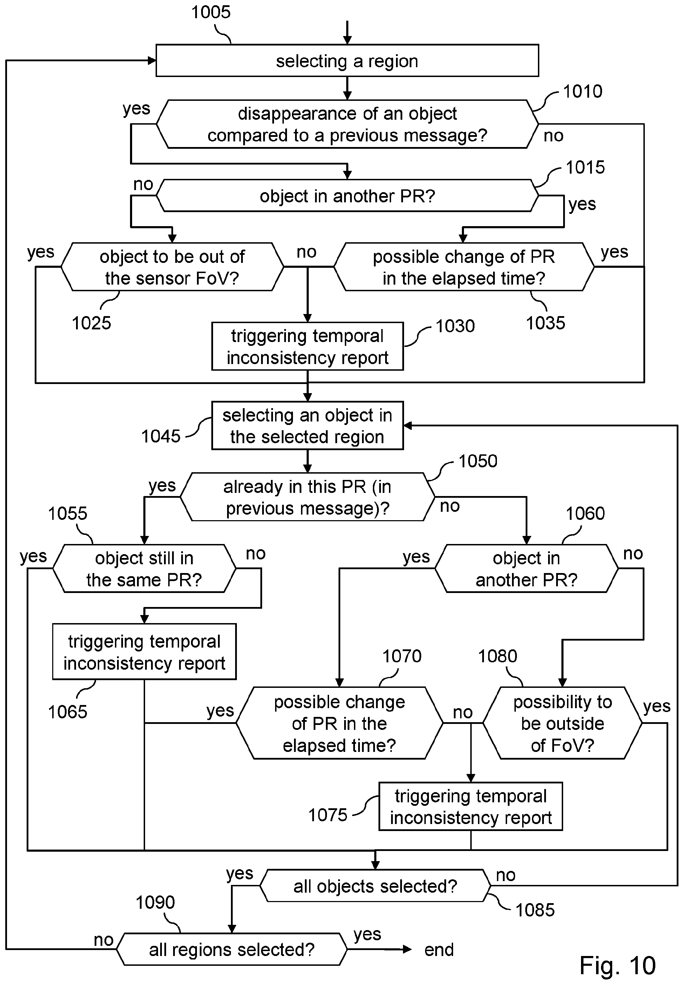

In step 455, it is determined whether the perception regions are the same between the messages. If the perception regions are not the same between the messages, the algorithm continues with a dynamic perception region temporal analysis in step 450. On the contrary, if the perception regions are the same between the messages, a temporal consistency analysis is carried out between messages with same perception regions (step 455, described in more detail in Figure 10).

In order to perform step 455, one region is crosschecked with the other regions, using the Intersection over Union (IoU) concept, where the area and position of a shape is compared to the area and position of another shape to get a percentage of matching. More precisely, the IoU between two shapes is calculated by dividing the area of intersection by the area of union. For example, the two same exact shapes would have an IoU of 100%. Again, the two exact same shapes but with a slightly different position would have a slightly lower IoU. On the other hand, a low IoU would mean two shapes are not good matches. Used with a threshold, the IoU can be used to identify similar shapes with a given tolerance. In this step, a threshold of 95% is used.

In step 450, the different regions are compared with each other. As the ITS-S which is generating the perception regions might be moving, it is possible that the regions have the same shape but not the same position. Therefore, the IoU method does not provide good results in such a case and the shapes of the regions between the two messages may be compared as well as the relative shift of the coordinates with the shift of the ITS-S itself. In addition, if possible, the object properties (like the coordinates, the speed, and the heading) are compared with the properties of the perception regions to identify impossible behaviour of objects. Then, the algorithm ends.

In step 455, objects properties (e.g., the speed and/or the heading) are monitored with regard to the evolution of these objects between the messages with different emission timestamp thanks to tracking. The objective is to detect impossible behaviour of the objects between two messages. If an inconsistency is detected, the emitter is considered to be misbehaving and a report generation is triggered.

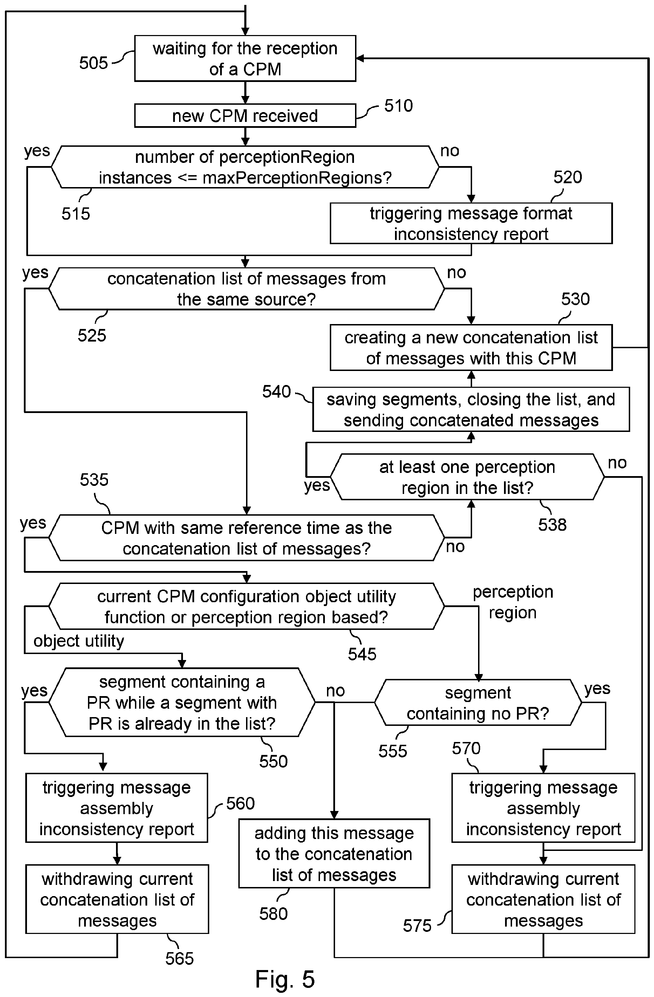

**Figure 5** illustrates an example of steps of an algorithm for concatenating CPMs, as described with reference 405 in Figure 4. In addition to concatenating CPMs, the steps illustrated in Figure 5 aim at detecting inconsistency between the format on the CPM received and the specification.

As illustrated, a first step is directed to waiting for a CPM to be received (step 505). Upon reception of a CPM (step 510), a test is carried out to determine whether the number of perception region instances in the message is less than or equal to the maximum of instances possible as described in the specification. If the number of perception region instances in the message is not less than or equal to the maximum of instances, a report generation indicting a format inconsistency is triggered (step 520). Next or if the number of perception region instances in the message is less than or equal to the maximum of instances, the algorithm continues on step 525.

For the sake of clarity, it is noted that a concatenated message (or complete message) is different from a concatenation list of messages. The difference here is that a concatenated message may be considered as a unique CPM, which may comprise information contained in a set of segments, while a concatenation list of messages is a list composed of segments that will be concatenated as a unique message in the future. A concatenation list of messages is not closed and may be expanded with new CPM segments. A concatenation list of messages is to be closed when a CPM or a segment of CPM from the same source with a different timestamp is received. The concatenated message is then built from the list, and a new concatenation list of messages is created for the CPM which has just been received.

It is checked, in step 525, whether a concatenation list of messages already exists for messages from the source of the received CPM. If a concatenation list of messages does not exist for messages from this source, a new concatenation list comprising the received CPM is created in step 530. Next, the algorithm continues on step 505 to wait for a new message. Accordingly to the illustrated example of steps, each source has a different concatenation list of messages.

On the contrary, if a concatenation list of messages exists for messages from this source, the algorithm continues on step 535, where it is checked whether the message received has the same reference time as the segments which constitute the concatenation list of messages. If the reference time is the same, it means that a new segment from the same source has been received (since the segments of a CPM should all have the same reference time). In such a case, the algorithm continues on step 545. On the contrary, if the reference time is not the same, this means that a CPM from a new set of segments or eventually a complete CPM has been received. In such a case, it is determined whether there is at least one region described in the list of messages (step 538). If there is not any region described in the list of messages, the list is withdrawn in step 575 as it is of no interest in the context of the disclosure. On the contrary, if there is at least one region described in the list of messages, the current concatenation list of messages is closed, all the segments of the list are saved (in case they need to be included in misbehaviour report evidence later), and the concatenated message is sent to another module to be checked (step 540), for example as described by reference to step 410 in Figure 4. Optionally, if the CPM received in step 505 was already a complete CPM, it may be decided not to save it in this step since the complete CPM is stored in step 415. To avoid redundancy, only the segments of CPMs may be stored here.

Then a new concatenation list of messages is created (step 530), without any CPM.

In step 545, if the message received has the same reference time as the segments which constitute the concatenation list of messages, a test is carried out to identify the actual assembly mode of the CPM received. As described by reference to Figure 3, CPMs can be divided in segments according to two modes: object utility function and perception region based. The modules that generate and receive CPMs should know beforehand in which mode they, and their neighbours, are configured. For example, a RSU may prefer a perception region based configuration while an ITS-S may use an object utility function mode. Therefore, a test may be carried out to determine whether the source is consistent with its previous message as it should not change its assembly configuration without informing the members of the network. If the assembly mode is the object utility function mode, the algorithm continues on step 550 and if the assembly mode is the perception region based mode, the algorithm continues on step 555.

In step 550, it is checked whether the segment received is containing a perception region while a segment with at least one perception region has already been received. If the segment received is containing a perception region while a segment with at least one perception region has already been received, a message assembly inconsistency report is triggered in step 560. In addition, the current concatenation list of messages is withdrawn (step 565). Optionally, all the following messages from this source may be ignored.

In step 555, it is checked whether there is at least one perception regions described in the segment. If there is not any perception region described in the segment, a report generation is triggered in step 570. In addition, the current concatenation list of messages is withdrawn (step 575). Optionally, all the following messages from this source may be ignored.

If the segment received is not containing any perception region while a segment with at least one perception region has already been received (step 550) or if there is at least one perception regions described in the segment (step 555), the CPM received is added to the current concatenation list (step 580).

Next, the algorithm loops on step 505 to process other CPMs received.

The inconsistency report format may be based on the ETSI specification of Misbehaviour Reporting Service (as described with reference to Figure 11). The observation, v2xPduEvidence, and nonv2xPduEvidence may be listed in the report, as follows:
- regarding format inconsistencies (step 515): the observation reported may be named PRRules-NumberOfPRTooLarge. It refers to the fact that the perceptionRegionContainer is containing a number of perceptionRegion instances superior to maxPerceptionRegions. The v2xPduEvidence field may contain at least one entry. The observation applies to the first entry. The subjectPdulndex in that V2xPduStream points to the Protocol Data Unit (PDU) in which the inconsistency has been detected. The v2xPdus field in that entry should contain at least the subject PDU. The PDU may be of any supported type and may be of type c-MbObsMsg-ieee1609Dot2Data unless another observation included in the same report requires a different PDU type,
- for inconsistencies directed to multiple descriptions of perception regions in different segments (step 560): the observation reported may be named Assembly-PRIncWithObjUtiIFuncConfig. It refers to the fact that a segment of CPM assembled in object utility function mode contains at least a perceptionRegion instance while another segment also contains a perceptionRegion instance. The v2xPduEvidence field may contain at least one entry. The observation applies to the first entry. The subjectPdulndex in that V2xPduStream points to the PDU which contains the perception region inconsistency. The v2xPdus field in that entry should contain at least the subject PDU and the PDU from the same set of segmentation that also contains a perception region. The PDUs may be of any supported type and may be of type c-MbObsMsg-ieee1609Dot2Data unless another observation included in the same report requires a different PDU type. The nonV2xPduEvidence field may contain the known assembly configuration mode of the emitter of the PDUs. The observation may point to this evidence, and
- for inconsistencies directed to the absence of description of perception regions in a segment (step 570): the observation reported may be named Assembly-PRIncWithPRBasedConfig. It refers to the fact that a segment of CPM assembled in perception region based mode is not containing any perceptionRegion instance. The v2xPduEvidence field may contain at least one entry. The observation applies to the first entry. The subjectPdulndex in that V2xPduStream points to the PDU which contains the perception region inconsistency. The v2xPdus field in that entry should contain at least the subject PDU. The PDU may be of any supported type and may be of type c-MbObsMsg-ieee1609Dot2Data unless another observation included in the same report requires a different PDU type. The nonV2xPduEvidence field may contain the assembly configuration of the emitter of the PDU. The observation may point to this evidence.

**Figure 6** illustrates an example of steps of an algorithm for analysing consistency between CPM perception region instances and predetermined rules, as described with reference 410 in Figure 4.

As illustrated, a first step is directed to a test for determining whether each of the perceived object identifiers is listed in no more than one region as it is a rule of the specification (step 605). If at least one perceived object identifier is listed in more than one region, a perception region rule inconsistency report is triggered (step 610). Since it cannot be determined which object identifier is to be deleted, the algorithm continues on step 615. On the contrary, if each of the perceived object identifiers is listed in no more than one region, the algorithm continues on step 615.

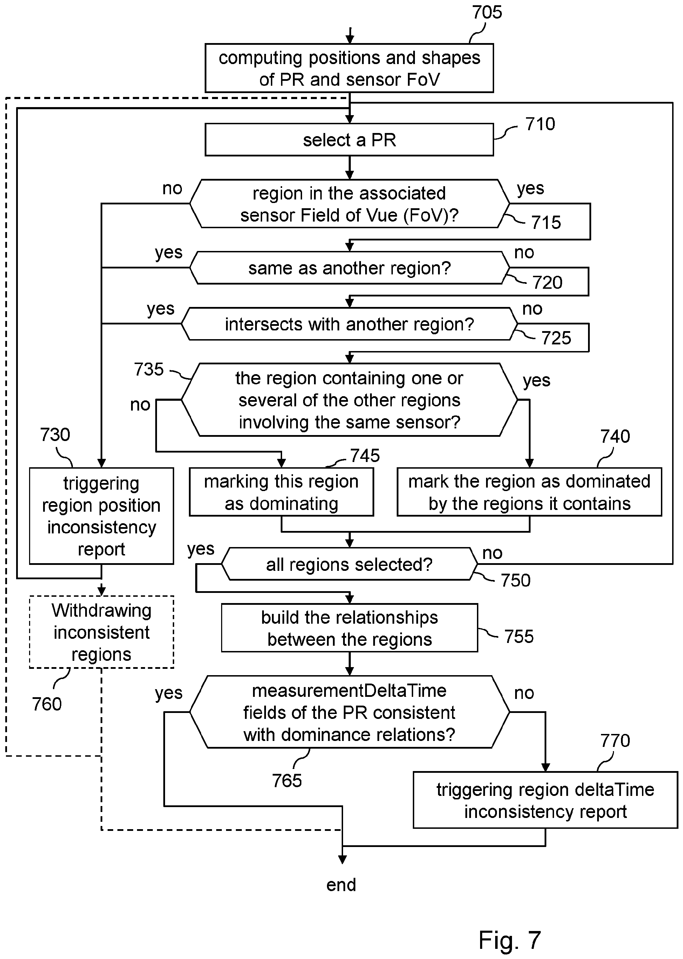

Step 615 aims at identifying the dominating and dominated regions, as described in more detail by reference to Figure 7. Table 2 in the Appendix provides an example of the relationships between the regions defined in the area illustrated in Figure 1. According to this example, an identifier is provided to each region and for each region, the list of the identifiers of the regions that are contained in this region is given as well as the identifier of the region containing this region.

Knowing these relationships, it is possible to detect inconsistencies between the objects of the regions.

In addition, some verifications regarding the positions of the regions are performed in step 615. In particular, it is possible to crosscheck the regions with the sensor Field-of-View (FoV) and with the other regions in order to identify regions that are not in the sensor FoV, regions that are intersecting with other regions, and/or regions that are redundant regions. Such verification could lead to inconsistency reports and/or to removal of the inconsistent regions within the message.

After having identified the dominating and dominated regions and possibly having carried out the geometric analysis of the regions, the consistency of the object identifiers (perceivedObjectlds) and the number of objects (numberOfPerceivedObjects) fields may be carried out in each region and between the regions.

In step 620, all the regions that are only dominating regions, i.e., which contain no other region, are selected. For example, in Figure 1, regions 115, 145, and 150 would be selected in step 620. Next, the algorithm enters a loop to select each region of the set of regions selected in step 620, one after another. To that end, one region of the set (that has not been selected previously) is selected in step 625. Next, a test is carried out to check whether the number of perceived objects (numberOfPerceivedObjects) of the selected region is equal to the number of object identifiers (perceivedObjectlds) of the selected region plus the number of object identifiers (perceivedObjectlds) indicated in the regions that dominate the selected region (step 630), if any. Since the selected region is a dominating only region, this test makes it possible to verify that the number of perceived object (numberOfPerceivedObjects) of the selected region is consistent with the number of object identifiers (perceivedObjectlds) of the selected region. If the number of perceived objects of the selected region is not equal to the number of object identifiers of the selected region plus the number of object identifiers indicated in the regions that dominate the selected region, if any, a perception region dominance inconsistency report is triggered (step 635). Optionally, as it is not possible to identify which of the two fields is not correct, an analysis module may be used to compare the results of the test carried out in step 630 for the other regions, to try to identify the problem (step 640).

Next, it is determined in step 645 whether all the regions of the set of regions determined in step 620 have been selected. If all the regions of the set of regions determined in step 620 have not been selected, the algorithm loops on step 625 to select another region of the set of regions. On the contrary, if all the regions of the set of regions determined in step 620 have been selected, the algorithm continues on step 650.

In step 650, it is determined whether some of the regions of the set of regions determined at step 620 are contained in one or more other regions. If none of the regions of the set of regions determined at step 620 is contained in another region, it means there are no other region to process and the algorithm ends. If the contrary, if some of the regions of the set of regions determined at step 620 are contained in one or more other regions, a new set of regions is determined, based on the regions that contain the regions of the previous set (step 660). Turning back to the regions of Figure 1, the set comprising regions 102, 110, and 140 would be determined in step 660, after having processed each region of the set comprising regions 115, 145, and 150.

Next, a test is carried out to determine whether the new set of regions comprises one or more regions that are contained in regions which are also in the new set of regions (step 665). If the new set of regions comprises one or more regions that are contained in regions which are also in the new set of regions, the regions that are contained in regions which are also in the new set of regions are removed them from the set (step 670). Turning back to the regions of Figure 1, region 110 would be removed from the new set of regions since region 140 is contained within region 110. Accordingly, the new set of regions would comprise only regions 102 and 140 after carrying out step 670. This step delays the test of a region containing other regions after the tests of all the regions it contains. Therefore, region 110 is selected and tested in the set of the next iteration.

If the new set of regions does not comprise any region that is contained in another region which is also in the new set of regions (step 665) or after having removed such regions (step 670), the algorithm loops on step 625 to check the regions of the new set of regions.

By using an analysis module (step 640) which would compare the results of the test carried out in step 630 between iterations (positive or negative), it could be possible to have a clearer idea of the regions that have inconsistent numberOfPerceivedObjects and perceivedObjectlds fields, and which field is not correct. Optionally, the suspected inconsistent regions may be deleted from the message.

Again, the inconsistency report format may be based on the ETSI specification of Misbehaviour Reporting Service (as described with reference to Figure 11). The observation, v2xPduEvidence, and nonv2xPduEvidence may be listed in the report, as follows:
- regarding perception region rule inconsistencies (step 605): the observation reported may be named PRRules-ObjectldlnSeveralPR. It refers to the fact that a perceivedObjectlds entry is contained in more than one perceptionRegion instance. The v2xPduEvidence field may contain at least one entry. The observation applies to the first entry. The subjectPdulndex in that V2xPduStream points to the PDU in which the inconsistency has been detected. The v2xPdus field in that entry should contain at least the subject PDU. It may contain several segments of PDU if the PDU was assembled from segments. The PDUs may be of any supported type and may be of type c-MbObsMsg-ieee1609Dot2Data unless another observation included in the same report requires a different PDU type, and
- regarding perception region dominance inconsistencies (step 630): the observation reported may be named PRDominance-numberOfObjlncWithObjlds. It refers to the fact that the value of the field numberOfPerceivedObjects of a perceptionRegion instance should be equal to the number of perceivedObjectlds entries of this region and of the regions it is dominated by. The v2xPduEvidence field may contain at least one entry. The observation applies to the first entry. The subjectPdulndex in that V2xPduStream points to the PDU in which the inconsistency has been detected. The v2xPdus field in that entry should contain at least the subject PDU. It may contain several segments of PDU if the PDU was assembled from segments. The PDUs may be of any supported type and may be of type c-MbObsMsg-ieee1609Dot2Data unless another observation included in the same report requires a different PDU type. The nonV2xPduEvidence field may contain the dominance computation parameters and results. The observation may point to this evidence.

**Figure 7** illustrates an example of steps of an algorithm for identifying dominating and dominated regions, as described with reference 615 in Figure 6, and for crosschecking regions with each other and with the sensor FoVs to identify shape and/or position inconsistencies.

As illustrated, a first step is directed to computing the positions and the shapes of the perception regions based on the information given by the perceptionRegionShape field of the perceptionRegion and sensorlnformation containers (step 705).

Next, a first region is selected for testing (step 710).

Next, the region position is crosschecked with its associated sensor FoV position (step 715). The aim of this step is to verify whether the selected region is in the FoV as it should be. If the selected region is not in the FoV, a report on region position inconsistency is triggered (step 730). If the selected region is in the FoV, the algorithm continues on step 720.

After triggering the inconsistency report (step 730), the algorithm loops on step 710 to select and process another region. Optionally, the inconsistent region may be deleted in step 760. At this point, the algorithm may end or loops on step 710 to select and process another region.

At step 720, the selected region is crosschecked with the other regions, using for example the Intersection over Union (IoU) mechanism. In this case, a minimum threshold, for example a minimum threshold set to 95%, may be set to consider that two shapes are the same. The aim of comparing the selected region with the others is to determine whether the selected region is already existing (step 720) or whether the selected region is partially contained in (or intersects with) another region (step 725). In both cases, if an inconsistency is detected, an inconsistency report is triggered (i.e., the algorithm goes to step 730).

Next, a test is carried out to determine whether the selected region is containing one or several other regions that involves the same sensor. This is achievable by verifying whether all the points of the other shapes are contained in the current shape, or by having a calculus similar to the IoU where a ratio is computed as the division of the intersection of two areas by the area of the region that is checked to determine if it is contained in the current region. If the selected region contains another region, it is marked as dominated by the regions it contains (step 740). On the contrary, if the selected region does not contain any other region, the selected region is marked as dominating (step 745). Next, the algorithm continues on step 750 where it is determined whether all the regions have been selected. If all the regions have not been selected, the algorithm loops on step 710 to select and process another region. On the contrary, if each region has been selected, the algorithm continues on step 755.

Turning back to the regions illustrated in Figure 1, the status of the regions would be defined as stated in Table 3 in the Appendix.

Next, knowing which regions are dominated and dominating, the relationships between the regions are built (step 755). For example, the dominating regions may be linked to their dominated regions as proposed in Table 2 in the Appendix.

Next, another test may be carried out on the perceptionRegion measurementDeltaTime (step 765) to verify that the dominating regions have been added later to the container than the regions they dominate (i.e., that the dominating regions have a delta time superior to the region they dominate). If one or more dominating regions have been added sooner than a region they dominate, a region deltaTime inconsistency is built (step 770).

Again, the inconsistency report format may be based on the ETSI specification of Misbehaviour Reporting Service (as described with reference to Figure 11). The observation, v2xPduEvidence, and nonv2xPduEvidence may be listed in the report, as follows:
- regarding region position inconsistencies (step 715): the observation reported may be named PRPosition-PRPosIncWithFoV. It refers to the fact that the shape of a perceptionRegion instance is out of the associated sensor Field of Vue. The v2xPduEvidence field may contain at least one entry. The observation applies to the first entry. The subjectPdulndex in that V2xPduStream points to the PDU in which the perceptionRegion instance is inconsistent with the sensor Field of View. The v2xPdus field in that entry should contain at least the subject PDU. It may contain several segments of PDU if the PDU was assembled from segments, and possibly a previous PDU if the sensorlnformationContainer was included in a previous message. The PDUs may be of any supported type and may be of type c-MbObsMsg-ieee1609Dot2Data unless another observation included in the same report requires a different PDU type. The nonV2xPduEvidence field may contain the IoU parameters and results. The observation may point to this evidence,
- regarding same region inconsistencies (step 720): the observation reported may be named PRPosition-PRShapeRedundancy. It refers to the fact that the position and shape of a perceptionRegion instance is the same as another one. The v2xPduEvidence field may contain at least one entry. The observation applies to the first entry. The subjectPdulndex in that V2xPduStream points to the PDU in which the inconsistency was detected. The v2xPdus field in that entry should contain at least the subject PDU. It may contain several segments of PDU if the PDU was assembled from segments. The PDUs may be of any supported type and may be of type c-MbObsMsg-ieee1609Dot2Data unless another observation included in the same report requires a different PDU type. The nonV2xPduEvidence field may contain the IoU parameters and results. The observation may point to this evidence,
- regarding interesting region inconsistencies (step 725): the observation reported may be named PRPosition-PRlntersection. It refers to the fact that the position and shape of a perceptionRegion instance is intersecting with another one. The v2xPduEvidence field may contain at least one entry. The observation applies to the first entry. The subjectPdulndex in that V2xPduStream points to the PDU in which the inconsistency was detected. The v2xPdus field in that entry should contain at least the subject PDU. It may contain several segments of PDU if the PDU was assembled from segments. The PDUs may be of any supported type and may be of type c-MbObsMsg-ieee1609Dot2Data unless another observation included in the same report requires a different PDU type. The nonV2xPduEvidence field may contain the IoU parameters and results. The observation may point to this evidence, and
- regarding region description time inconsistencies (step 765): the observation reported may be named PRDominance-PRIncMeaDeltaTime. It refers to the fact that the measurementDeltaTime indicated in a perceptionRegion instance is inconsistent with the referenceDeltaTime of its dominating or dominated regions. The v2xPduEvidence field may contain at least one entry. The observation applies to the first entry. The subjectPdulndex in that V2xPduStream points to the PDU in which the inconsistency was detected. The v2xPdus field in that entry should contain at least the subject PDU. It may contain several segments of PDU if the PDU was assembled from segments. The PDUs may be of any supported type and may be of type c-MbObsMsg-ieee1609Dot2Data unless another observation included in the same report requires a different PDU type. The nonV2xPduEvidence field may contain the dominance computation parameters and results. The observation may point to this evidence.

**Figure 8** illustrates an example of steps of an algorithm for recovering objects, as described with reference 425 in Figure 4.

The aim of the steps illustrated in Figure 8 is to link all the object identifiers (perceivedObjectlds) listed in the perceptionRegion instances to the objectld field of the perceivedObject instances in order to check whether the objects exist and to recover object properties for further analysis, it being observed that according to the CPM specification, perceived objects may be absent from CPMs for a maximum time of T_GenCpmMax/2 for the Type-A objects and T_GenCpmMax for the Type-B objects. After this time period, they should be included in the next CPM which should be sent in T_GenCpm (at the next CPM generation event).

As illustrated, a first step is directed to determining whether a previous CPM from the same source is stored (step 805). If not any previous CPM from the same source is stored, the algorithm ends as it is not actually possible to recover information on the object since no previous CPM from this source has been saved. Optionally, the algorithm may continue on step 435 in Figure 4, knowing that not all objects were recovered. On the contrary, if a previous CPM from the same source is stored, a test is carried out to determine whether the CPM was emitted before the reference time of the received CPM minus T_GenCpmMax and T_GenCpm, representing respectively the maximum time an object can be omitted and the time between the generation of two CPMs. If the CPM was emitted before the reference time of the received CPM minus T_GenCpmMax and T_GenCpm, it means that the object identifiers indicated in the perception region of the recently received CPM are referencing objects that are not described in previous CPMs according to the specification. Accordingly, the objects cannot be recovered and thus, a ghost object report is triggered (step 815). It is then possible to end the algorithm as it failed to recover all objects. Alternately, the identifiers of the ghost objects may be removed from the perception region of the CPM (step 825) so that the algorithm continues on step 435 in Figure 4.

On the contrary, if the CPM was emitted after the reference time of the received CPM minus T_GenCpmMax and T_GenCpm, the algorithm continues on step 830 where it is determined whether a perceivedObjectlds entry of the perceptionRegion instance may be found in the perceivedObject instances. To that end, it is determined whether the perceivedObjectlds entry is equal to one of the values of the objectID field of the perceivedObject instances. If the perceivedObjectlds entry is not equal to any of the objectID of the perceivedObject instances, the algorithm loops on step 805 and an older CPM from the same source is selected, if any. If the perceivedObjectlds entry is equal to one of the objectID of the perceivedObject instances, the perceptionRegion object id is linked to the perceived object in step 835, in order to use its information and properties later.

Next, it is checked whether all the object identifiers of all the perceptionRegion instances are linked to a perceivedObject instance. If all the object identifiers of all the perceptionRegion instances are linked to a perceivedObject instance, the algorithm ends. On the contrary, if at least one object identifier of all the perceptionRegion instances is not linked to a perceivedObject instance, the algorithm loops on step 830 to select and test another entry of a perceivedObjectlds.

Again, the report format may be based on the ETSI specification of Misbehaviour Reporting Service (as described with reference to Figure 11). The observation, v2xPduEvidence, and nonv2xPduEvidence may be listed in the report, as follows:
- regarding inconsistencies resulting from too old CPMs (step 810): the observation reported may be named PRObjectlds-PRObjldslncWithPercObjContainer. It refers to the fact that at least one perceivedObjectlds entry of a perceptionRegion instance is not referring to any objectld field of a perceivedObject instance of the last messages received. The v2xPduEvidence field may contain at least one entry. The observation applies to the first entry. The subjectPdulndex in that V2xPduStream points to the PDU containing the perceptionRegion instance in which the perceivedObjectlds entry has no reference. The v2xPdus field in that entry should contain at least the subject PDU and all the previous PDUs with a referenceTime inferior to the received CPM referenceTime - T_GenCpmMax - T_GenCpm. It may contain several segments of PDU if the PDUs were assembled from segments. The PDUs may be of any supported type and may be of type c-MbObsMsg-ieee1609Dot2Data unless another observation included in the same report requires a different PDU type.

**Figure 9** illustrates an example of steps of an algorithm for comparing physical properties of objects, for example of the objects recovered in steps 420 and/or 425 of Figure 4, to physical properties of the regions that contain these objects, as described with reference 430 in Figure 4.

As illustrated, a first step is directed to determining whether the objects contained in a perceptionRegion instance may all fit in the perception region their identifiers are listed in, in view of their size (step 905). If the objects contained in a perceptionRegion instance cannot all fit in the perception region their identifiers are listed in, a property inconsistency report is triggered (step 925).

On the contrary, if the objects contained in a perceptionRegion instance may all fit in the perception region their identifiers are listed in, another test is carried out to determine whether the perceived objects are listed in the right perceptionRegion instance (especially, in the dominating regions) by comparing their coordinates with the coordinates of the region (step 910). If the perceived objects are not listed in the right perceptionRegion instance, a property inconsistency report is triggered (step 925).

On the contrary, if the perceived objects are listed in the right perceptionRegion instance, another test is carried out to determine whether the objects in the perceivedObjectContainer that are not listed in a perceptionRegion instance should be listed in a perceptionRegion instance, in view of their coordinates (step 915). If the objects in the perceivedObjectContainer that are not listed in a perceptionRegion instance should be listed in a perceptionRegion instance, a property inconsistency report is triggered (step 925). On the contrary, if the objects in the perceivedObjectContainer that are not listed in a perceptionRegion instance should not be listed in a perceptionRegion instance, the algorithm ends.

After triggering a property inconsistency report (step 925), the algorithm ends. Optionally, it would be possible to perform the three checks (steps 905, 910, and 915) even if one of these tests triggers a report as they may give better clarity on the situation. Also, it may be possible to remove from the perception regions the inconsistent ids of the message, or to add the ids that should be listed in a perception region.

Again, the report format may be based on the ETSI specification of Misbehaviour Reporting Service (as described with reference to Figure 11). The observation, v2xPduEvidence, and nonv2xPduEvidence may be listed in the report, as follows:
- regarding inconsistencies resulting from the size of the objects with regard to size of the region they belong to (step 905): the observation reported may be named PRObjectProperties-PRSizelncWithObjSize. It refers to the fact that at least one perceivedObjectlds entry of a perceptionRegion instance is referring to a perceivedObject instance with a size not fitting in the perception region shape. The v2xPduEvidence field may contain at least one entry. The observation applies to the first entry. The subjectPdulndex in that V2xPduStream points to the PDU containing the perceptionRegion instance in which the inconsistency was detected. The v2xPdus field in that entry should contain at least the subject PDU. It may contain another PDU containing the relative(s) perceivedObject instance(s). The PDUs may be of any supported type and may be of type c-MbObsMsg-ieee1609Dot2Data unless another observation included in the same report requires a different PDU type,
- regarding inconsistencies resulting from the location of the objects with regard to the region they belong to (step 910): the observation reported may be named PRObjectProperties-ObjPoslncWithPRPos. It refers to the fact that a perceivedObjectlds entry of a perceptionRegion instance is referring to a perceivedObject instance with coordinates not inside the perception region shape. The v2xPduEvidence field may contain at least one entry. The observation applies to the first entry. The subjectPdulndex in that V2xPduStream points to the PDU containing the perceptionRegion instance in which the inconsistency was detected. The v2xPdus field in that entry should contain at least the subject PDU. It may contain another PDU containing the relative(s) perceivedObject instance(s). The PDUs may be of any supported type and may be of type c-MbObsMsg-ieee1609Dot2Data unless another observation included in the same report requires a different PDU type, and
- regarding inconsistencies resulting from the location of the objects that are not described in a perception region instance (step 915): the observation reported may be named PRObjectProperties-ObjNotlnPR. It refers to the fact that a perceivedObject instance with coordinates indicating a position inside a perceptionRegion instance shape while the perceptionRegion instance is not listing the object id in a perceivedObjectlds entry. The v2xPduEvidence field may contain at least one entry. The observation applies to the first entry. The subjectPdulndex in that V2xPduStream points to the PDU containing the perceptionRegion instance which should be listing the object id. The v2xPdus field in that entry should contain at least the subject PDU. It may contain another PDU containing the relative(s) perceivedObject instance(s). The PDUs may be of any supported type and may be of type c-MbObsMsg-ieee1609Dot2Data unless another observation included in the same report requires a different PDU type.

**Figure 10** illustrates an example of steps of an algorithm for checking temporal consistency of CPMs, as described with reference 455 in Figure 4.

The aim of these steps is to detect impossible behaviour from the perceived objects between two messages emitted from the same source but at a different timestamp (referenceTime). Object properties like the speed or heading are used to track the object presence or absence in the regions of the previous message.

As illustrated, a first step is directed to selecting a first perception region (step 1005). Next, the identifiers of the objects listed in the selected perception region of the current and in the previous message are compared (step 1010). In particular, it is determined whether an object has disappeared from the selected perception region. If at least one object has disappeared from the selected perception region, the algorithm continues on step 1015. On the contrary, if not any object has disappeared from the selected perception region, the algorithm continues on step 1045.

If at least one object has disappeared from the selected perception region, a test is carried out to determine whether this object is now in another perception region (step 1015). If the object that disappeared is not in another perception region, another test is carried out to determine whether this object could actually be out of the sensor FoV (step 1025), in view of its speed and heading at the timestamp of the previous message. If this object could actually be out of the sensor FoV, the algorithm continues on step 1045. On the contrary, if this object could not actually be out of the sensor FoV, meaning that an object has disappeared from the selected perception region and it should not have, a temporal inconsistency report is triggered (step 1030).

If the object that disappeared is in another perception region, another test is carried out to determine whether this object which is in another region could have changed of regions in the elapsed time between the messages (step 1035), in view of the object speed and heading and the road configuration. For example, if the old and the new region it has been seen in are actually separated by a barrier (as for example in Figure 1, with regions 102 and 110), it might not be physically possible, depending on the elapsed time between the messages. If such a change was not possible, a temporal inconsistency report is triggered (step 1030).

If the object that disappeared is not in another region and could actually be out of the sensor FoV (step 1025), if the object that disappeared is in another region and could have changed of regions in the elapsed time between the messages (step 1035), or if not any object disappeared from the selected perception region (step 1010), an object is selected among the objects listed in the selected perception region.

Next, the contents of the two messages are compared to determine whether the selected object was already in the same perception region (step 1050). If the selected object was already in the same perception region, another test is carried out to determine whether the object, which is still in the same region, should have changed of regions in the elapsed time (step 1055), in view of its speed and heading in the previous message. If the object should have changed of regions in the elapsed time, a temporal inconsistency report is triggered (step 1065). If the object should not have changed of regions in the elapsed time or after having triggered a temporal inconsistency report, the algorithm continues on step 1085.

If the selected object was not already in the same perception region (step 1050), another test is carried out to determine whether the selected object was in another perception region (step 1060). If the selected object which was not in the selected perception region was in another perception region at the timestamp of the previous message, another test is carried out to determine whether the object which has changed of the region could have physically change of region between the two messages in view of its speed, heading, and the road configuration (step 1070). If this object could not have physically change of region between the two messages, a temporal inconsistency report is triggered (step 1075). If this object could have physically change of region between the two messages or after having triggered a temporal inconsistency report, the algorithm continues on step 1085.

If the selected object which was not in the selected perception region was not in another perception region at the timestamp of the previous message (step 1060), another test is carried out to determine whether the selected object could have been outside of the sensor FoV (step 1080), in view of its speed and heading. If the selected object could not have been outside of the sensor FoV, meaning that the object has appeared from nowhere, a temporal inconsistency report is triggered (step 1075). If the selected object could have been outside of the sensor FoV or after having triggered a temporal inconsistency report, the algorithm continues on step 1085.

Next, in step 1085, a test is carried out to determine whether all the objects of the selected perception region have been selected. If at least one object of the selected perception region has not been selected, the algorithm loops on step 1045 to select an object of the selected perception region that has not been selected yet. On the contrary, if all the objects of the selected perception region have been selected, the algorithm continues on step 1090 where it is determined whether all the perception regions of the current message have been selected. If at least one perception region of the current message has not been selected, the algorithm loops on step 1005 to select a perception region that has not been selected yet. On the contrary, if all the perception regions of the current message have been selected, the algorithm ends.

Again, the inconsistency report format may be based on the ETSI specification of Misbehaviour Reporting Service (as described with reference to Figure 11). The observation, v2xPduEvidence, and nonv2xPduEvidence may be listed in the report, as follows:
- regarding temporal inconsistencies resulting from objects that disappeared from a perception region (step 1025): the observation reported may be named PRObjectBehaviour-ObjDisparition. It refers to the fact that a perceptionRegion instance is not listing the id of an object while the speed and heading of the object associated with the region it was listed in (in the previous message) predicted that the object should be in this perceptionRegion instance. The v2xPduEvidence field may contain at least one entry. The observation applies to the first entry. The subjectPdulndex in that V2xPduStream points to the PDU containing the perceptionRegion instance in which the inconsistency was detected. The v2xPdus field in that entry should contain at least the subject PDU and the previous PDU from the same source with the same perception regions. It may contain another PDU containing the relative(s) perceivedObject instance(s). The PDUs may be of any supported type and may be of type c-MbObsMsg-ieee1609Dot2Data unless another observation included in the same report requires a different PDU type. The nonV2xPduEvidence field may contain the tracking information of the object. The observation may point to this evidence,
- regarding temporal inconsistencies resulting from objects that changed of perception region (step 1035 or 1070): the observation reported may be named PRObjectBehaviour-ObjTeleportation. It refers to the fact that a perceptionRegion instance is listing the id of an object while the speed and heading of the object associated with the region it was listed in (in the previous message) predicted that the object should not be in this perceptionRegion instance. The v2xPduEvidence field may contain at least one entry. The observation applies to the first entry. The subjectPdulndex in that V2xPduStream points to the PDU containing the perceptionRegion instance in which the inconsistency was detected. The v2xPdus field in that entry should contain at least the subject PDU and the previous PDU from the same source with the same perception regions. It may contain another PDU containing the relative(s) perceivedObject instance(s). The PDUs may be of any supported type and may be of type c-MbObsMsg-ieee1609Dot2Data unless another observation included in the same report requires a different PDU type. The nonV2xPduEvidence field may contain the tracking information of the object,
- regarding temporal inconsistencies resulting from objects that remained in a perception region (step 1055): the observation reported may be named PRObjectBehaviour-StationaryObj. It refers to the fact that a perceptionRegion instance is listing the id of an object while the speed and heading of the object associated with the region it was listed in (in the previous message) predicted that the object should still be in the perceptionRegion instance it was in (in the previous message). The v2xPduEvidence field may contain at least one entry. The observation applies to the first entry. The subjectPdulndex in that V2xPduStream points to the PDU containing the perceptionRegion instance in which the inconsistency was detected. The v2xPdus field in that entry should contain at least the subject PDU and the previous PDU from the same source with the same perception regions. It may contain another PDU containing the relative(s) perceivedObject instance(s). The PDUs may be of any supported type and may be of type c-MbObsMsg-ieee1609Dot2Data unless another observation included in the same report requires a different PDU type. The nonV2xPduEvidence field may contain the tracking information of the object, and
- regarding temporal inconsistencies resulting from objects that appeared in a perception region (step 1080): the observation reported may be named PRObjectBehaviour-ObjApparition. It refers to the fact that a perceptionRegion instance is listing the id of an object while the speed and heading of the object indicate that the object should have been in a perceptionRegion instance of the previous message while it was not. The v2xPduEvidence field may contain at least one entry. The observation applies to the first entry. The subjectPdulndex in that V2xPduStream points to the PDU containing the perceptionRegion instance in which the inconsistency was detected. The v2xPdus field in that entry should contain at least the subject PDU and the previous PDU from the same source with the same perception regions. It may contain another PDU containing the relative(s) perceivedObject instance(s). The PDUs may be of any supported type and may be of type c-MbObsMsg-ieee1609Dot2Data unless another observation included in the same report requires a different PDU type.

### Misbehaviour report

**Figure 11** illustrates the misbehaviour report format, as defined in the ETSI Misbehaviour Reporting Service.

According to the illustrated format, the misbehaviour report is a message that comprises, after decryption, a version 1105, a generationTime 1110, an observation Location 1115 referring to the place where the misbehaviour was detected, and finally a report 1120.

As illustrated, the report contains an aid (application id) 1125 and a content data field 1130.

For each application, a set of possible observations with their target properties (e.g., a speed or a security level) are defined. In addition, the list of possible non V2X evidences (evidences that are not ITS messages) is defined by the application. This is achieved thanks to Information Object Class and Information Object Set concepts. The aid selects the set of observations and non V2X evidence specific to an application. Content field 1130 refers to the content data field which contains the observations 1135, the v2xPduEvidence 1145, and the sequence of nonV2xPduEvidence 1155.

According to some embodiments, observations 1135 is composed of a sequence of ObservationsByTarget 1140. This data type contains all of the observations related to a particular "target" property, such as a speed or a security level, for example as follows:
- tgtld that identifies the "target" of the observation, e.g., the speed. This identifier is drawn from an application-specific Information Object Set of observations by target and
- observations that contains all the observations related to this target. The observations are drawn from the provided Information Object Set.

According to some embodiments, v2xPduEvidence 1145 is composed of a sequence of V2xPduStream 1150. This data type contains PDU stream from a single sender, for example as follows:
- v2xPdus is the PDU stream, i.e., a series of PDUs for the same AID sent by the same sender (where "sent by the same sender" means "signed by the same certificate"). The PDUs are ordered in chronological order of reception by the reporter. All PDUs in this field are of the same type, i.e., correspond to the same IdObsPdu. This field preferably always contains a "subject PDU", i.e., a PDU that is the subject of the observations. Additional PDUs may be included depending on which observations appear in the observations field. A specification of an observation is expected to include a specification of which PDUs are to be included in this field,
- certificate (optional) contains the certificate that signed the PDUs if it is not explicitly included in one of the PDUs. For ETSI PDUs (i.e., PDUs with the psid field in the security headerlnfo equal to an ITS-AID assigned to ETSI as per ETSI TS 102 965) the certificate may be of type EtsiTs103097Certificate as specified in ETSI TS 103 097 (there is no need to include the entire certificate chain from the ITS station up to the Root CA, just the ITS station certificate is enough, as the MA is expected to have the rest of the certificates in the chain). It is noted that if the sender certificate changes, PDUs signed by the new certificate and included in this report is in a separate V2xPduStream instance within the v2xPduEvidence field,
- subjectPdulndex identifies which PDU within the v2xPdus sequence is the "subject PDU", i.e., the PDU associated with the observations, and
- id identifies the type of the PDU, meaning in this case what protocol headers are included from the stack.

According to some embodiments, nonV2xPduEvidence 1155 is composed of a sequence of NonV2xPduEvidenceltem 1160. This data type contains evidence, which may be referenced by one or more observations, for example as follows:
- id identifies the evidence type.
- evidence contains the evidence.

Still according to some embodiments, a set of target property for the AsrCpm in which the observations issued from perception region inconsistencies are classified may be defined as follows:
- PRRules refers to the rules of the perception regions (e.g., an id can only be in one perception region),
- assembly refers to the assembly rules (e.g., perception regions should be listed in the first segment in case CPMs assembly mode is in Object Utility Function),
- PRDominance refers to the dominance rules of the perception regions (e.g., perception regions dominating should be contained in the region they dominate),
- PRPosition refers to the position of the perception regions (e.g., a region should not intersect with another region),
- PRObjectlds refers to the object ids and the number of perceived objects listed in a perception region (e.g., an object id listed in a perception region should be listed in the perceived object container in a recent CPM),
- PRObjectProperties refers to the properties of a perceived object linked to a perceived object id in a perception region (e.g., an object listed in a perception region should have its coordinates in the perception region), and
- PRObjectBehaviour refers to the behaviour of a perceived object in the perception regions during time (e.g., an object moving should change of region after a while).

The new observations along with their target property which are defined in this document are summarized in Table 4 in the Appendix.

**Figure 12** illustrates an example of steps of an algorithm for generating a misbehaviour report, as described with reference 460 in Figure 4. These steps are carried out when a misbehaviour generation is triggered.

As illustrated, the construction of the misbehaviour report begins with the choice of the CPM application a set of observations to be selected is defined for the CPMs (more particularly, to the perception regions of CPMs). Therefore, the AsrCpm class of information is selected to build the misbehaviour report (step 1205).

Next, the appropriate observation property target relevant to the misbehaviour detected is selected and included in the misbehaviour report (step 1210), the appropriate observation (part of the target property observations list) relevant to the misbehaviour detected is selected and included in the misbehaviour report (step 1215), and the relevant evidence is included in the misbehaviour report (step 1220). The evidence may be completed with optional information if the pieces of evidence are relevant and not redundant.

Next, the misbehaviour report is encrypted (step 1225) before being sent to the relevant authorities like the MA (step 1230).

**Figure 13** illustrates an example of steps of an algorithm for receiving and processing a misbehaviour report. These steps may be carried out in the device illustrated in Figure 2c, for example a MA.

After being received, a misbehaviour report is decrypted (step 1305).

Next, in step 1310, a test is carried out to determine whether the reporter certificate is valid (looking at its aid, its ssp, the validity region, the validity period, etc.).

If the reporter certificate is valid, another test is carried out to determine whether the misbehaviour report received is actually a misbehaviour report (step 1315).

If the misbehaviour report received is actually a misbehaviour report, another test is carried out to determine whether the aid references a valid application (step 1320).

If the aid references a valid application, another test is carried out to determine whether the aid is the CPM one (step 1325).

If the aid is not the CPM one, the misbehaviour report is analysed as a function of its application field (step 1328) and the algorithm ends.

On the contrary, if the aid is the CPM one, another test is carried out to determine whether the target id references a valid target property (step 1330).

If the target id references a valid target property, another test is carried out to determine whether the observations made are part of the CPM observations and more particularly if the observation is part of the target property observation list (step 1335).

If the observations made are part of the CPM observations, another test is carried out to determine whether all the evidence needed is included in the misbehaviour report and that no irrelevant information is provided (step 1340).

If all the evidence needed is included in the misbehaviour report and that not any irrelevant information is provided, another test is carried out to determine whether the reported ITS has a valid certificate (step 1345).

If the reported ITS has a valid certificate, a message is generated for the appropriate authorities (e.g., road operators, police, certificate authorities, local infrastructure) in step 1350.

If the reporter certificate is not valid, if the misbehaviour report received is actually not a misbehaviour report, if the aid does not reference a valid application, if the target id does not reference a valid target property, if the observations made are not part of the CPM observations, if all the evidence needed is not included in the misbehaviour report and/or irrelevant information is provided, and/or if the reported ITS does not have a valid certificate, misbehaviour is detected and the device generates relative information for its internal use. Next, in step 1350, a message is generated for the appropriate authorities (e.g., road operators, police, certificate authorities, local infrastructure).

### Example of a hardware to carry out steps of the method of embodiments of the present disclosure

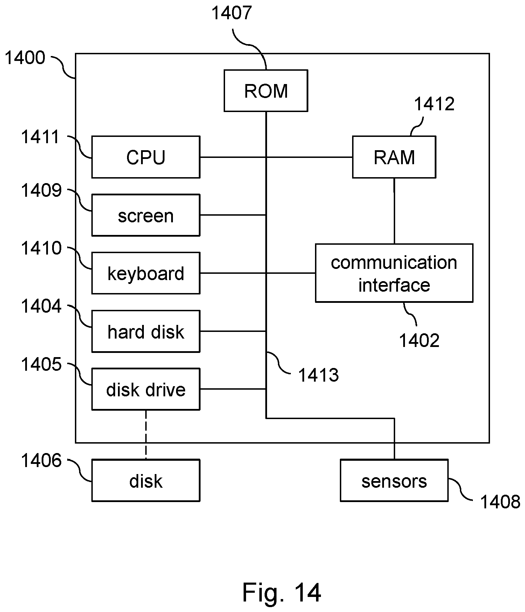

**Figure 14** is a schematic representation of an example of a communication ITS-S device configured to implement some embodiments of the present disclosure. It may be either an ITS-S embedded in a vehicle or in a road side entity.

The communication device 1400 may preferably be a device such as a microcomputer, a workstation or a light portable device. The communication device 1400 comprises a communication bus 1413 to which there are preferably connected:
- a central processing unit 1411, such as a microprocessor, denoted CPU or a GPU (for graphical processing unit);
- a read-only memory 1407, denoted ROM, for storing computer programs for implementing some embodiments of the disclosure;
- a random access memory 1412, denoted RAM, for storing the executable code of methods according to embodiments of the disclosure as well as the registers adapted to record variables and parameters necessary for implementing methods according to embodiments of the disclosure; and
- at least one communication interface 1402 connected to the radio communication network over which ITS messages are transmitted. The ITS messages are written from a FIFO sending memory in RAM 1412 to the network interface for transmission or are read from the network interface for reception and writing into a FIFO receiving memory in RAM 1412 under the control of a software application running in the CPU 1411.

Optionally, the communication device 1400 may also include the following components:
- a data storage means 1404 such as a hard disk, for storing computer programs for implementing methods according to one or more embodiments of the disclosure;
- a disk drive 1405 for a disk 1406, the disk drive being adapted to read data from the disk 1406 or to write data onto said disk;
- a screen 1409 for serving as a graphical interface with the user, by means of a keyboard 1410 or any other pointing means.

The communication device 1400 may be optionally connected to various peripherals including perception sensors 1408, such as for example a digital camera, each being connected to an input/output card (not shown) so as to supply data to the communication device 1400.

Preferably the communication bus provides communication and interoperability between the various elements included in the communication device 1400 or connected to it. The representation of the bus is not limiting and in particular the central processing unit is operable to communicate instructions to any element of the communication device 1400 directly or by means of another element of the communication device 1400.

The disk 1406 may optionally be replaced by any information medium such as for example a compact disk (CD-ROM), rewritable or not, a ZIP disk, a USB key or a memory card and, in general terms, by an information storage means that can be read by a microcomputer or by a microprocessor, integrated or not into the apparatus, possibly removable and adapted to store one or more programs whose execution enables a method according to the disclosure to be implemented.

The executable code may optionally be stored either in read-only memory 1407, on the hard disk 1404 or on a removable digital medium such as for example a disk 1406 as described previously. According to an optional variant, the executable code of the programs can be received by means of the communication network, via the interface 1402, in order to be stored in one of the storage means of the communication device 1400, such as the hard disk 1404, before being executed.

The central processing unit 1411 is preferably adapted to control and direct the execution of the instructions or portions of software code of the program or programs according to the disclosure, which instructions are stored in one of the aforementioned storage means. On powering up, the program or programs that are stored in a nonvolatile memory, for example on the hard disk 1404 or in the read-only memory 1407, are transferred into the random access memory 1412, which then contains the executable code of the program or programs, as well as registers for storing the variables and parameters necessary for implementing the disclosure.

In a preferred embodiment, the apparatus is a programmable apparatus which uses software to implement the disclosure. However, alternatively, the present disclosure may be implemented in hardware (for example, in the form of an Application Specific Integrated Circuit or ASIC).

Although the present disclosure has been described herein above with reference to specific embodiments, the present disclosure is not limited to the specific embodiments, and modifications will be apparent to a skilled person in the art which lie within the scope of the present disclosure.

Many further modifications and variations will suggest themselves to those versed in the art upon referring to the foregoing illustrative embodiments, which are given by way of example only and which are not intended to limit the scope of the disclosure, that being determined solely by the appended claims. In particular, the different features from different embodiments may be interchanged, where appropriate.

Each of the embodiments of the disclosure described above can be implemented solely or as a combination of a plurality of the embodiments. Also, features from different embodiments can be combined where necessary or where the combination of elements or features from individual embodiments in a single embodiment is beneficial.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

### APPENDIX

**Table 1: Example of perception regions and associated object features**

| **CPM perceptionRegion** | **ObjectIDs listed in the region** | **Number of objects in the region** |
|---|---|---|
| 102 | 105, 106 | 2 |
| 110 | 113 | 3 |
| 115 | *none* | 0 |
| 140 | 114 | 2 |
| 145 | 112 | 1 |
| 150 | *none* | 0 |

**Table 2: Example of perception regions relationships**

| **perceptionRegion ID** | **contains** | **is contained in** |
|---|---|---|
| 102 | 150 | / |
| 110 | 115, 140, 145 | / |
| 115 | / | 110 |
| 140 | 145 | 110 |
| 145 | / | 140 |
| 150 | / | 102 |

**Table 3: Example of perception region domination status**

| **perceptionRegion ID** | **status** |
|---|---|
| 102 | dominated by 150 |
| 110 | dominated by 115, 140, 145 |
| 115 | dominating |
| 140 | dominated by 145 |
| 145 | dominating |
| 150 | dominating |

**Table 4: Example of misbehaviour observations on perception regions**

| **Target property** | **Observation name** |
|---|---|
| PRRules | PRRules-NumberOfPRTooLarge |
| | PRRules-ObjectIdInSeveraIPR |
| Assembly | Assembly-PRIncWithObjUtiIFuncConfig |
| | Assembly-PRIncWithPRBasedConfig |
| PRDominance | PROomimance-numberOfObjIncWithObjIds |
| | PRDominance-PRIncMeaDeltaTime |
| PRPosition | PRPosition-PRPosIncWithFoV |
| | PRPosition-PRShapeRedundancy |
| | PRPosition-PRIntersection |
| PRObjectIds | PRObjectIds-PRObjIdsIncWithPercObjContainer |
| PRObjectProperties | PRObjectProperties-ObjNotInPR |
| | PRObjectProperties-PRSizeIncWithObjSize |
| | PRObjectProperties-ObjPosIncWithPRPos |
| PRObjectBehaviour | PRObjectBehaviour-ObjDisparition |
| | PRObjectBehaviour-ObjTeleportation |
| | PRObjectBehaviour-StationaryObj |
| | PRObjectBehaviour-ObjApparition |

## Claims

1. A method, in an Intelligent Transport System, ITS, of signalling an originating ITS station, ITS-S, with improper behaviour, the method comprising:
obtaining an indication representative of an inconsistency between a first item of information of a description of a first perception region and a second item of information of a description of a second perception region, each of the descriptions of the first and
the second perception regions being contained in a perception region container of a Collective Perception Message, CPM, generated by the originating ITS-S, or
representative of an inconsistency between the first item of information and a third item of information of a description of a perceived object in relation to the first perception region; and
generating a report comprising the obtained indication.

2. The method of claim 1, wherein the obtained indication is representative of an inconsistency between the first item of information and the second item of information and wherein the descriptions of the first and the second perception regions belong to a same segment of a CPM or to different segments of a same CPM.

3. The method of claim 1 or claim 2, wherein the obtained indication is representative of an inconsistency between the first item of information and the second item of information and wherein each of the descriptions of the first and the second perception regions comprises a list of identifiers of perceived objects and a number of perceived objects.

4. The method of claim 1, wherein the obtained indication is representative of an inconsistency between the first item of information and the third item of information and wherein the description of the perceived object and the description of the first perception region belong to a same CPM or to to different CPMs.

5. The method of claim 1 or claim 4, wherein the obtained indication is representative of an inconsistency between the first item of information and the third item of information, wherein the description of the first perception region comprises a list of identifiers of perceived objects and a number of perceived objects and wherein the description of the perceived object comprises physical properties of the perceived object.

6. The method of any one of claims 1 to 5, wherein the obtained indication comprises a type of improper behaviour.

7. The method of any one of claims 1 to 6, wherein the inconsistency is directed to an object missing in the description of the first perception region, to an extra object in the description of the first perception region, or to an incorrectly located object in the descriptions of the first and second perception regions.

8. The method of any one of claims 1 to 7, wherein the inconsistency is further determined as a function of object properties and/or as a function of a format of the description of the first perception region.

9. A method, in an Intelligent Transport System, ITS, of detecting a misbehaving originating ITS station, ITS-S, the method comprising:
receiving a Collective Perception Message, CPM, generated by the originating ITS-S,
the CPM comprising a perception region container comprising a description of a first perception region; and
detecting an improper behaviour of the originating ITS-S by determining an inconsistency between a first item of information of the description of the first perception region and a second item of information of a description of a second perception region in a perception region container of a CPM generated by the originating ITS-S or by determining an inconsistency between the first item of information and a third item of information of a description of a perceived object in relation to the first perception region.

10. The method of claim 9, wherein the improper behaviour of the originating ITS is detected by determining an inconsistency between the first item of information and the second item of information and wherein the descriptions of the first and the second perception regions are received in different segments of the same received CPM.

11. The method of claim 9, wherein the improper behaviour of the originating ITS is detected by determining an inconsistency between the first item of information and the third item of information and wherein the description of the first perception region and the description of the perceived object are received in different CPMs.

12. The method of any one of claims 9 to 11, further comprising ignoring the received CPM upon detecting the improper behaviour of the originating ITS-S.

13. A method, in an Intelligent Transport System, ITS, of identifying a misbehaving originating ITS station, ITS-S, the method comprising:
receiving a report comprising an indication representative of an inconsistency between a first item of information of a description of a first perception region and a second item of information of a description of a second perception region, each of the descriptions of the first and second perception regions being contained in a perception region container of a Collective Perception Message, CPM, generated by the originating ITS-S, or
representative of an inconsistency between the first item of information and a third item of information of a description of a perceived object in relation to the first perception region; and
identifying the misbehaving originating ITS-S as a function of the indication.

14. The method of claim 13, further comprising notifying an appropriate authority about the misbehaving originating ITS-S.

15. A misbehaviour report to transmit information in an Intelligent Transport System, ITS, comprising an indication representative of an inconsistency between a first item of information of a description of a first perception region and a second item of information of a description of a second perception region, each of the descriptions of the first and second perception regions being contained in a perception region container of a Collective Perception Message, CPM, generated by an originating ITS-S, or representative of an inconsistency between the first item of information and a third item of information of a description of a perceived object in relation to the first perception region.

16. A computer program product for a programmable apparatus, the computer program product comprising a sequence of instructions for implementing each of the steps of the method according to any one of claims 1 to 13 when loaded into and executed by the programmable apparatus.

17. A device for an Intelligent Transport System, ITS, station, the device comprising a processing unit configured for carrying out each of the steps of the method according to any one of claims 1 to 13.
